# EUROPEAN PATENT SPECIFICATION

(11) **EP 1 933 626 B1**
(45) Date of publication and mention of the grant of the patent: **26.08.2015**
(21) Application number: 06849380.8
(22) Date of filing: 02.09.2006
(51) Int. Cl.: A01N 65/00, A01N 65/20, A01N 37/06, A01N 37/12, C05F 11/00, A01P 21/00, A01N 65/40

(54) **SEED SUSPENSIONS FROM "LUPINUS ALBUS", ISOLATED COMPOUNDS THEREOF AND USE AS BIOLOGICAL PLANT STRENGTHENING AGENT**
SAMEN SUSPENSIONEN AUS LUPINUS ALBUS, ISOLIERTE VERBINDUNGEN DARAUS UND DIE VERWENDUNG AS BIOLOGISCHES PFLANZENSTÄRKUNGSMITTEL
SUSPENSIONS DE GRAINES DE "LUPINUS ALBUS", COMPOSES ISOLES DE CELLES-CI ET UTILISATION COMME AGENT BIOLOGIQUE DE RENFORCEMENT DE VEGETAUX

(30) Priority: 06.09.2005 EP 05019323
(43) Date of publication of application: 25.06.2008
(73) Proprietor: AgrarForum AG, 29699 Bomlitz (DE); AgrarForum SA (PTY) Ltd., Universitas 9321 (ZA)
(72) Inventor: The designation of the inventor has not yet been filed
(74) Representative: Benz, Jürgen
(86) International application number: PCT/EP2006/008586
(87) International publication number: WO 2007/090438

(56) References cited:
- EP-A2- 0 775 443
- WO-A-83/00419
- WO-A-91/18508
- WO-A-2004/018069
- WO-A2-99/38379
- GB-A- 230 203
- KAHNT G ET AL: "USE OF LUPINEX TO INCREASE CROP YIELD AND IMPROVE HARVEST QUALITY WITH LESSER NITROGEN FERTILIZATION" JOURNAL OF AGRONOMY AND CROP SCIENCE, BERLIN, DE, vol. 166, 1991, pages 228-237, XP002046313 ISSN: 0931-2250

## Description

### TECHNICAL FIELD OF THE INVENTION

The invention relates to the use of extracts and suspensions of seeds deriving from the species *Lupinus albus* for plant protecting, especially bio-stimulatory efficacy, when applied to other plants in vitro and in vivo, including field conditions. The extracts and suspensions according to this invention are suitable to be used as plant strengthening agent and / or plant protecting agents (without being toxic for the environment) for many crops and economic plants as an alternative for chemical pesticides.

### BACKGROUND OF THE INVENTION

Worldwide agriculture suffers, especially in developing countries such as in Africa, from annual huge losses of crop and other economic plants due to plant diseases. More than 30% of the food, fiber, feed and energy produced in crop production systems are destroyed by insects and diseases annually on a global scale. These yield losses are high as a result of low-input production systems due to the non- affordability of synthetic fungicides to farmers in developing countries that depend on non-conventional disease management practices often providing doubtful results.

In contrast, crop and plant producers in developed countries rely largely on synthetic pesticides to control plant diseases. It is an established fact that the use of synthetic chemical pesticides provides many benefits to crop producers. These benefits include higher crop yields, improved crop quality and increased food production for an ever increasing world population.

However, the increased use of synthetic herbicides and pesticides lead to the introduction of many chemical compounds in modern society and that this may have been connected with the increase of pollutants as well as the decline of natural vegetation experienced back then. Many of the pollutants decompose very slowly and consequently accumulate in nature. It seems, therefore, not far fetched to engage in screening programmes with the objective to identify natural compounds, products or extracts from wild or even crop plants with the potential to serve as alternatives for synthetic pesticides on grounds of claims made in literature that natural compounds are more bio-degradable than their synthetic analogues. Additionally, wild plants that shows potential to act as donor plants for these so-called "phytochemicals" in this respect, may have the added advantage to be developed as alternative crops.

Of all these known phytochemicals, especially in terms of their potential to be applied as natural plant-protecting products in the agricultural industry, plant growth regulators are probably the least studied. Although well known plant hormones such as auxins, gibberellins and cytokinins are applied in the horticultural industry on a rather small scale, it seems that most of the knowledge that has been collected over decades did not lead to large scale application in the agricultural industry. Economic viability might have been one of the reasons for this situation and accentuates the importance of keeping agricultural economics in mind when natural product development is considered.

Secondary plant metabolites are distinct from primary metabolites in that they are generally non-essential for the basic metabolic processes such as respiration and photosynthesis. They are numerous and widespread, especially in higher plants and often present in small quantities (1-5%) as compared to primary metabolites (carbohydrates, proteins, lipids). Secondary metabolites are probably produced when required in the plant system and are synthesized in specialized cell types. Ecologically, secondary metabolites play essential roles in attracting pollinators, as adaptations to environmental stresses and serve as chemical defenses against insects and higher predators, micro-organisms and even other plants (allelochemicals). Abiotic stress such as nutrient limitation, light intensity, water stress and others has been considered to trigger the formation of secondary metabolites. A biotic stress related type of plant-pathogen interaction involves the production of metabolites as part of a plant defense arsenal against microbial invasion and is considered disease determinants. Secondary metabolites with anti-microbial properties include terpenoids (e.g. iridoids, sesquiterpenoids, saponins), nitrogen-and/or sulphur containing (e.g. alkaloids, amines, amides), aliphatics (especially long-chain alkanes and fatty acids) and aromatics (e.g. phenolics, flavonoids, bi-benzyls, xanthones and benzoquinones).

Another related area of organic farming systems is the potential to apply natural plant extracts as either plant growth regulators or bio-stimulants. Many natural plant compounds have been identified that affect the growth and development of plants, acting also as anti-microbial or anti-fungal agents.

Secondary metabolites from plants may show also bio-stimulatory activities in plants, other plants included. Probably the most effective compound to enhance crop yield, crop efficiency and seed vigour has been identified as a brassinosteroid (Mandava, 1988, Plant Physiology Plant Molecular Biology 39: 23-52*).* More recently a new generation of phytohormones, namely brassinosteroids, was discovered (Schnabl et al., 2001,Phytochemistry 5: 169-183; EP 1 051 075 B1). Further, other compounds that comply with the definition of secondary metabolites and that revealed plant growth regulatory or stimulating activities, have been identified. These include abscisic acid, sterols, cucurbitacins and the naphtaquinone juglone, to mention a few (Seigler, 1995, Plant secondary Metabolism. Kluwer Academic Publishers. Massachutts. USA). Sesquiterpene lactones were isolated from witch weed (*Striga hermonthica* [Del] Benth.), an economically important root parasitic weed of the Poaceae family in semi-arid Sub-Saharan Africa (Ejeta et al., 1993, In: Research Bulletin 991; Agricultural Experimental Station: Purdue University, West Lafayette, pp.27). These active substances are labile and active at extremely low (picomolar) concentrations and have been shown to stimulate seed germination. Understanding the structure-function relationships of these germination stimulants has also been hindered by their low rates of production, laborious isolation procedures and complex stereochemistry, emphasizing the thorough approach needed to evaluate the application potential of any given natural compound in the agricultural industry. In this regard it seems imperative that any claims made on the application potential of a specific natural compound, on grounds of *in vitro* results, should be supported by *in vivo* data.

### SUMMARY OF THE INVENTION

The invention provides extracts and preparations based on the seed of the species *Lupinus albus*, which elicits a significant bio-stimulatory activity as defined below in vitro and in vivo against other plants, preferably cultivated plants, even under field and glasshouse conditions. The bio-stimulatory activity is expressed, above all, by an increased growth metabolism supporting coleoptile and root growth of many cultivated plants, including crops.

The invention provides finally compounds isolated and purified from said extracts / preparations of *Lupinus albus*, which also show significant plant protecting activity, especially bio-stimulatory activities as mentioned above, when applied to other plants in vitro and in vivo, field cultivation included.

The preparations for use according to the invention can be provided as crude extracts or as dried powder dependent on the process of their manufacture. The preparations may comprise additionally, especially for use in field cultivation, solid preferably pulverulent fillers or carrier materials according to the state of the art. Moreover, the preparations according to the invention may comprise conventional additives that augment or modulate the effect of the preparation. The preparations as used according to the invention can be provided also in a liquid, preferably aqueous form, which can be uses as a spray, and thus can be easily atomized on the areas under cultivation. In such solutions or suspensions the extracts and preparations of the invention reveal their full plant protecting activity in a concentration range between 0.5 mg and 50 mg/l (extract or powder per liter) in case of preparations from seeds of *Lupinus albus.*

Also disclosed are processes for the manufacture of the crude extracts and dry powder preparation based on extraction of the plants or plant parts with organic polar solvents, such as methanol or ethanol or mixtures thereof.

Finally is disclosed a process of isolating, purifying and identifying substances from said extracts which show significant bio-stimulatory and optionally anti-fungal activity in diseased plants in vitro and in vivo.

In more detail the invention provides:
- The use of a plant preparation for biological protecting and / or strengthening plants based on seeds of *Lupinus albus* in form of a dry powder, obtainable by the following steps:
   (ii) soaking the ground material in 90 - 100% methanol or ethanol, most preferably ethanol, or starting with methanol in the first extraction step and switching to ethanol in the second extracting step (v), thus forming a suspension / solution;
   (iii) performing a stirred extraction of the suspension, preferably for at least 48h;
   (iv) evaporating the solvent without prior separation of the solid phase from the soluble organic phase;
   (v) soaking the evaporated solid phase residue in a polar organic solvent as defined under
   (ii) and repeating steps (iii) and (iv); and
   (vi) drying the evaporated solid phase residue, thus obtaining a dry powder.
- The used preparation may further comprise solid, pulverulent carrier materials or fillers and / or optionally additives that augment or regulate the effect of the preparation.
- The used preparation may be in form of an aqueous solution or suspension, wherein preferably the concentration of crude extract or the dry powder is in the range from 0.5 mg/l to 50 mg/l, and most preferably in the range from 1 mg/l to 10 mg/l. The optimum concentration of Lupinus albus as dried powder or crude extract is preferably 5 mg/l (± 10%).
- The used plant preparation may comprise linoleic acid or an ester of linoleic acid, preferably trilinoleate. It should be noted that these compounds contribute to the bio-stimulatory effect of the suspension significantly probably in interaction with other ingredients of the plant material.
- The use of a corresponding preparation or composition as bio-stimulatory agent, which preferably elicits stimulation of germination, cleoptile growth, root growth and enhances respiration rate, especially of yeast cells.

The bio-assays as described below employed in a screening programme to test for bio-stimulatory properties of a finely ground and solubilized *Lupinus albus* seed suspension (SS) included its effect on the respiration rate of monoculture yeast cells as well as seed germination and seedling growth of a number of crops while comparing to an untreated water control. A commercial natural bio-stimulant, *ComCat*^{®} (CC) (as disclosed in EP 1 051 075 B1), was used as a positive control. As the active substance(s) of the *L. albus* seed suspension as well as its optimum concentration was unknown, a concentration range (0.05, 0.5, 5.0 and 50.0 mg / l) was tested under laboratory conditions. Although the optimum concentration of *CC* is 0.5 mg / l according to the manufacturers (Agraforum, Germany), it was also tested at the same concentration range as for SS. Bakers yeast, *Saccharomyces cerivisiae*, is used in the respiration rate test because of its simple nutritional needs. Its usefulness is further based on its ability to convert sugars and other carbon sources into ethanol and carbon dioxide in the absence of oxygen (anaerobic) while the carbon dioxide released is stoichiometric with each molecule of glucose metabolized. This supplies a simple screening procedure to ascertain whether the active compounds contained in the *L. albus* seed suspension (SS) possessed the potential to manipulate respiratory metabolism in any way. Indeed respiration rate measurements on monoculture yeast cells reveal that both the 5 mg / l and 50 mg / l SS concentrations increase the rate significantly compared to the untreated control and also compared favourably with the positive control, CC, even at its optimum concentration of 0.5 mg/l.

The results indicate that a directly proportional relationship seemed to exist between an elevated respiration rate in yeast cells and seedling growth as seed treatment with SS significantly stimulated root and coleoptile growth of Cress seedlings over a period of 96 hours compared to the untreated control.

Treatment of Cress, lettuce and bean seeds with a concentration range of the *L. albus* seed suspension indicate that 5 mg / 1 was the optimum concentration as the germination of seeds from all of these crops was stimulated either markedly or significantly compared to the water control. Both elevated and lower concentrations than the optimum inhibit seed germination in these crops while germination of cabbage seeds is stimulated significantly by the rather low concentration of 0.5 mg / 1. SS treatment has no significant effect on the percentage germination of beetroot, carrot, wheat, tomato and garden turnip seeds (results not shown) while the positive control, CC, has virtually no effect on the germination of seeds from any of the crops tested. The latter is in line with previous findings of the manufacturers of ComCat namely that CC has little effect on seed germination but rather on seedling growth.

The germination data strongly indicate that the seeds of different crops react differently to treatments with SS suggesting that different mechanisms of action might be involved; an aspect that needs further investigation. Subsequently, the influence of the *L. albus* seed suspension on the seedling growth of these crops are monitored in terms of both coleoptile and root growth. From the acquired data it became clear that different crops once again react differently to treatment with both SS and CC, and especially to different concentrations, in terms of coleoptile and root growth. For instance, a 5 mg / l SS concentration contributes to optimal coleoptile and root growth induction in Cress and cauliflower seedlings while a 0.5 mg / l concentration is optimal for cabbage and lettuce seedlings. Moreover, it is interesting to note that neither of the two SS concentrations that have a stimulatory effect on the seedling growth of some of the test crops, shows any effect on the growth of bean seedlings, the only other legume tested. This indicates that active substances extracted from plants might not have manipulatory or allelopathic effects on plants of the same species.

Although to different extents, seed treatment with SS has a more pronounced effect on both germination and subsequent seedling growth of the crops tested than did the positive control *ComCat*^{®} (CC). The latter, for instance, inhibits both coleoptile and root growth in Cress seedlings even at the optimal concentration of 0.5 mg / 1, whereas the SS treatment either has no effect (beans) or stimulated seedling growth at either 0.5 or 5 mg / 1 concentrations in most of the test crops. Further, where CC stimulates coleoptile growth in cauliflower and cabbage, both belonging to the Brassicaceae family, it has virtually no effect on the growth of lettuce and bean seedlings. On the other hand CC stimulates root growth most in cabbage and lettuce while only slightly in bean seedlings. Once again the earlier observation regarding the different reactions of different crops to seed treatment with natural bio-stimulants is confirmed. In conclusion, it is rather interesting to note that SS had a more pronounced effect on root growth than on coleoptile growth of seedlings following seed treatment of different crop plants.

### DETAILED DESCRIPTION OF THE INVENTION

### (A) General Definitions

Above and below terms and expressions are used which have according to the understanding of the this invention the following meanings:
The term **"plant protecting agent"** or **"plant protective agent"** means, if not otherwise specified, any kind of synthetic or natural agent, product, extract, composition that is effective in a broad sense for the protection and health of a plant against infection and damages by pathogens in vitro and / or in vivo. The term includes agents, products, extracts, compositions or single isolated components of extracts which may show a couple of different biological activities and / or properties, such as antimicrobial, antiviral, antifungal, and bio-stimulatory activity / efficacy, growth inducing / promoting activity (with respect to the plant to be protected), growth inhibitory activity (with respect to the plant(s) competitive to the plant to be protected), systemic and / or immunological acquired resistance inducing / promoting activity, and allelopathy inducing / promoting activity. The term according to this invention does not mean agents, such as pesticides, which are toxic for the environment or display an negative impact on the environment including humans and animals. Therefore, the term differs from that used in many national plant protection regulations, wherein pesticides are expressively included.
The term **"plant strengthening agent"** is an agent which protects the plant in the sense of an plant protecting agent as defined above, however by strengthening the power of resistance of a plant or a part of a plant, in a way that the plant treated with said agent is in a position to hold off by own internally induced metabolic processes the pathological impact of a bacterium, a virus, a fungus or a toxic compound.
The term **"biological plant protection"** means according to the invention, if not otherwise specified, that the protection of a plant is achieved by naturally occurring or naturally derived substances or sources preferably from plants, and not by synthetic or chemical means or agents, which do not occur in nature, preferably plants or part of plants.
The term "**biological plant protecting / strengthening agent**" is thus, consequently a plant extract, a plant preparation, a composition based on plants or parts thereof, or an agent isolated from a plant extract / preparation / composition, which all show significant efficacy against a plant pathogen in vitro and / or in vivo. This term includes also chemically synthesized compounds which are structurally and functionally identical with the isolated naturally derived compound, but excludes expressively chemically synthesized pesticides and related compounds having no natural derived counterpart and which are toxic for the environment or humans or animals.
The term "**pesticide**" means according to the invention, if not otherwise specified, not naturally derived or occurring, synthetic compounds, agents or compositions which have plant protecting efficacy.
The term "**plant pathogen**" means a compound or composition or living material, such as a microorganism (including viruses), which causes disease or damage to the plant. In a narrower scope of the invention the term is focused to pathogenic microorganisms including metabolic products of these microorganisms.
The term "**antimicrobial**" according to the invention encompasses an efficacy or activity against microorganisms, including viruses, bacteria and fungi, that reduces or eliminates in vitro and / or in vivo the (relative) number of active microorganisms which attack the plant or parts thereof to be protected. Thus, the term includes the terms "antiviral", "antibacterial", and "antifungal". An "**antimicrobial agent**" according to the inventionis a biological plant protecting agent as specified above, which prevents or reduces infections or damages of a plant caused by a pathogenic microorganism.
The term "**antifungal**" means according to the invention an activity or efficacy (e.g. of an agent or extract, etc.), that reduces or eliminates the (relative) number of active fungi. An "**antifungal agent**" according to the invention is a biological plant protecting agent as specified above, which prevents or reduces in vitro and / or in vivo infections or damages of a plant caused by a pathogenic fungus. The antifungal activity may lead to the inhibition of mycelial growth as well as spore germination of fungi.
The term "**bio-stimulatory**" means according to the invention, if not otherwise specified, an activity or efficacy which stimulates, increases or improves many different processes in the plant or plant parts, such as improved generation of growth promoting substances like sugars and amino acids, improved adequate supply of cells with available nutrients and growth regulators, enhanced cell metabolism, improved cell decontamination, enhanced immune defense, promotion of growth and yield, promotion of germination and/or seedling growth, induction of systemic acquired resistance (SAR), and inhibition of growth and yield of competing plants (allelopathy). The bio-stimulatory activity can be caused by agents, plant extracts and compositions including metabolic compounds synthesized by the plant to be protected after induction of their synthesis by said bio-stimulatory agent. A "**bio-stimulatory agent**" according to the invention is a biological plant protecting agent as specified above, which shows the above-specified bio-stimulatory properties in a plant treated with this agent in vitro and / or in vivo.
A "**plant growth regulator**" is a compound or a mixture of substances either natural or synthetic, that modifies or controls one or more specific physiological processes within a plant. If the compound is produced within the plant it is called a plant hormone e.g. auxins, gibberellins, abscisic acid and ethylene.

### (B) Plant Description

The *Lupinus* are a large genus of handsome plants, represented in Europe, Asia and North and South America, the poisonous properties of which are apparently very irregularly and unequally distributed.

A number of the species are cultivated only as ornamental plants, but others are grown for fodder, and if not over-fed, are found highly nutritive and wholesome. If the seeds of certain species are eaten in a more or less mature condition, poisoning is liable to occur, great numbers of animals sometimes being affected. These poisoning accidents have occurred in Europe and in the United States.

The species best known - as fodder - is the WHITE LUPIN of cultivation, *Lupinus albus* (Linn.) (French, *Lupin*; German, *Wolfsbohne*), native of Southern Europe and adjacent Asia, a plant of about 2 feet high, with leaves cut palmately into five or seven divisions, 1 to 2 inches long, smooth above, and white, hairy, beneath. The flowers are in terminal racemes, on short footstalks, white and rather large, the pod 3 to 4 inches long, flattish, containing three to six white, circular, flattened seeds, which have a bitter taste.

Although the commercial cropping of lupins is very new, lupin seed has been used as a food since ancient times. The Mediterranean white lupin (*Lupinus albus* L.) has been used as a subsistence crop for three thousand years or more

### (C) FIGURE LEGENDS

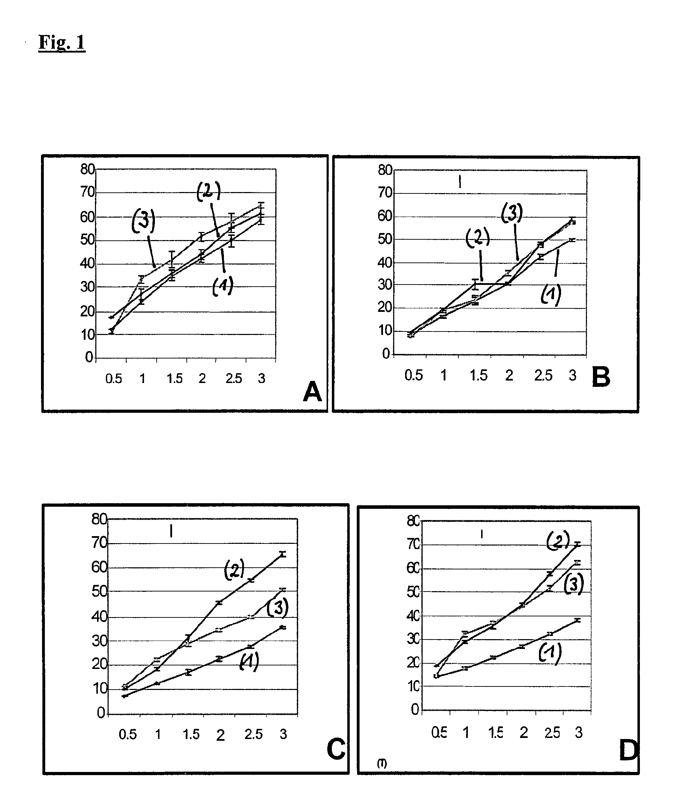

**Fig. 1****:** The effect of a solubilized seed suspension of *Lupinus albus* (**SS**) at different concentrations [**A)** 0.05 mg / l, **B)** 0.5 mg / l, **C)** 5 mg / l and **D)** 50 mg / l distilled water] on the respiration rate of monoculture yeast cells. A commercially available bio-stimulant, *ComCat® (**CC**),* was used as a positive control and water as a negative control. X-axis: time (h); Y-axis: respiration rate (cm³, CO₂ release), water (1), SS(2), CC(3)

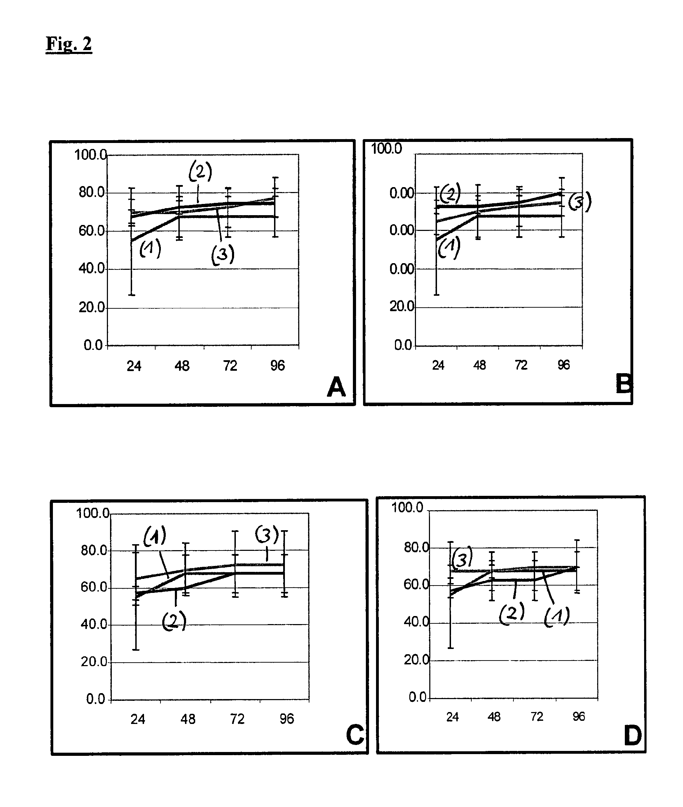

**Fig. 2****:** The effect of a solubilized seed suspension of *Lupinus albus* (**SS**) at different concentrations [**A)** 0.05mg / l, **B)** 0.5 mg / l, **C)** 5 mg / l and **D)** 50 mg / l distilled water] on the percentage germination of Cress seeds. A commercially available bio-stimulant, *ComCat® (**CC**)*, was used as a positive control and water as a negative control. X-axis: time (h); Y-axis: percentage germination (%), water (1), SS(2), CC(3)

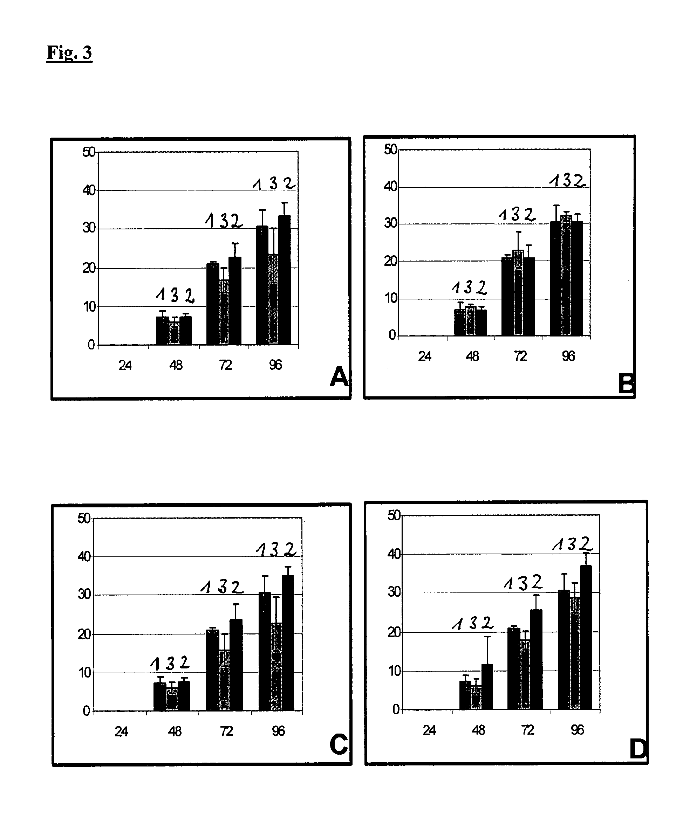

**Fig. 3****:** The effect of a solubilized seed suspension of *Lupinus albus* (**SS**) at different concentrations [**A)** 0.05 mg / l, **B)** 0.5 mg / l, **C)** 5 mg / l and **D)** 50 mg / l distilled water] on the coleoptile growth of Cress seedlings. A commercially available bio-stimulant, *ComCat® (**CC**)*, was used as a positive control and water as a negative control. X-axis: time (h); Y-axis: length (mm), water (1), SS(2), CC(3)

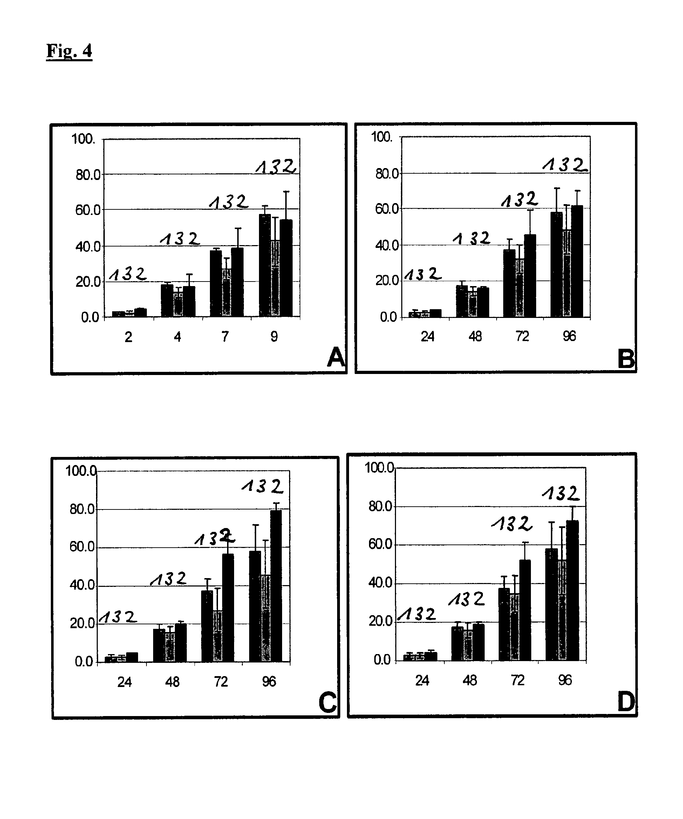

**Fig. 4****:** The effect of a solubilized seed suspension of *Lupinus albus* (**SS**) at different concentrations [**A)** 0.05 mg / 1, **B)** 0.5 mg / l, **C)** 5 mg / l and **D)** 50 mg / l distilled water] on the root growth of Cress seedlings. A commercially available bio-stimulant, *ComCat® (**CC**)*, was used as a positive control and water as a negative control. X-axis: time (h); Y-axis: length (mm), water (1), SS(2), CC(3)

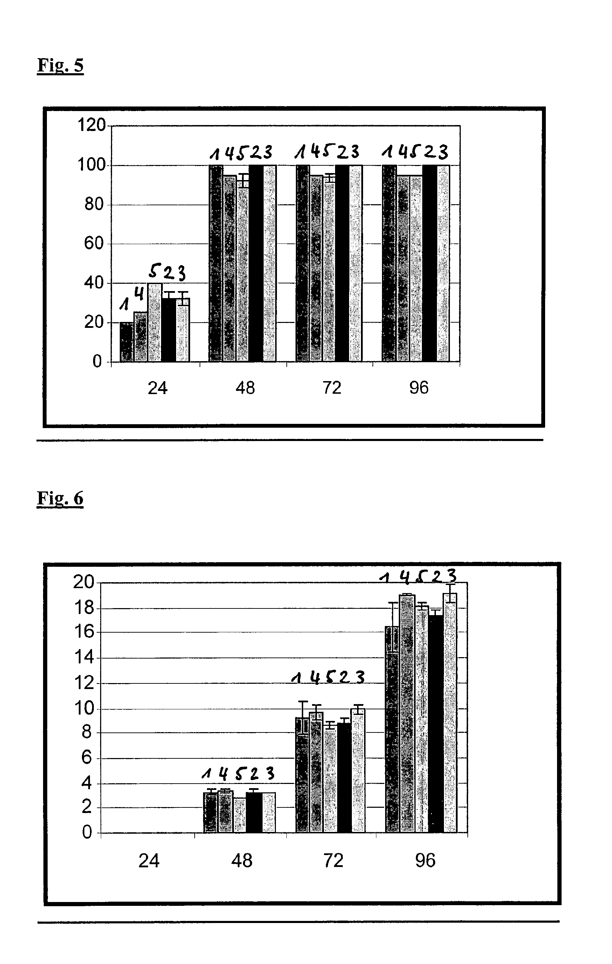

**Fig. 5****:** The effect of a solubilized seed suspension of *Lupinus albus* (**SS**) at different concentrations [0.5 mg / l and 5 mg / l distilled water] on the percentage germination of cauliflower seeds. A commercially available bio-stimulant, *ComCat® (**CC**)*, was used as a positive control and water as a negative control.
X-axis: time (h); Y-axis: % germination, water (1), SS 0.5(2), SS 5(3), CC 0.5(4), CC 5 (5)
**Fig. 6****:** The effect of a solubilized seed suspension of *Lupinus albus* (**SS**) at different concentrations [0.5 mg / 1 and 5 mg / 1 distilled water] on the coleoptile growth of cauliflower seedlings. A commercially available bio-stimulant, *ComCat® (**CC**),* was used as a positive control and water as a negative control.
X-axis: time (h); Y-axis: length (mm), water (1), SS 0.5(2), SS 5(3), CC 0.5(4), CC 5 (5)

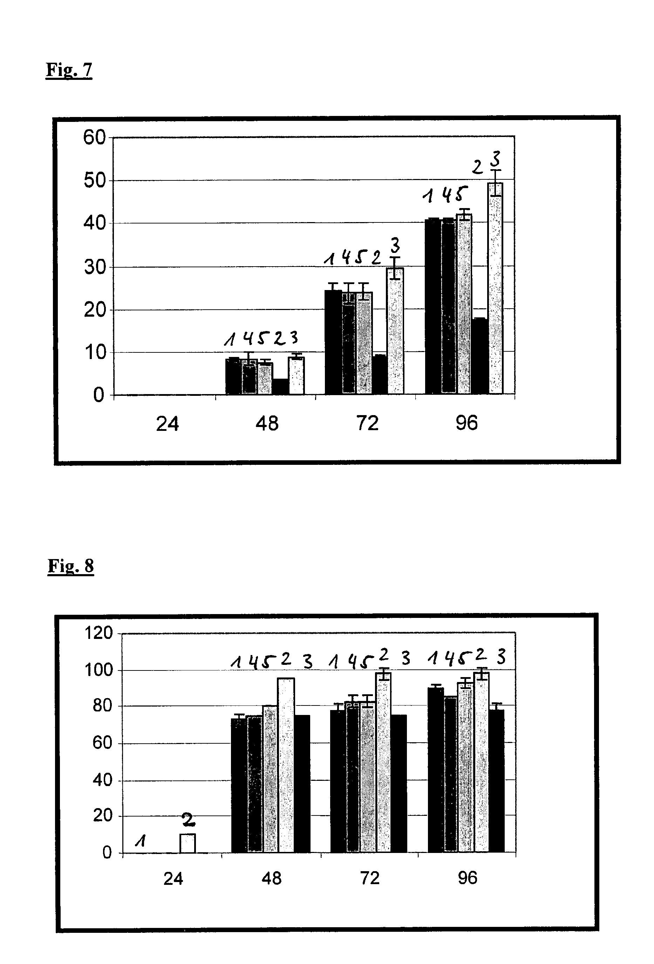

**Fig. 7** The effect of a solubilized seed suspension *of Lupinus albus* (**SS**) at different concentrations [0.5 mg / l and 5 mg / l distilled water] on the root growth of cauliflower seedlings. A commercially available bio-stimulant, *ComCat*® *(**CC**)*, was used as a positive control and water as a negative control.
X-axis: time (h); Y-axis: length (mm), water (1), SS 0.5(2), SS 5(3), CC 0.5(4), CC 5 (5).
**Fig. 8** The effect of a solubilized seed suspension *of Lupinus albus* (**SS**) at different concentrations [0.5 mg / l and 5 mg / l distilled water] on the percentage germination of cabbage seeds. A commercially available bio-stimulant, *ComCat*® *(**CC**),* was used as a positive control and water as a negative control.
X-axis: time (h); Y-axis: % germination, water (1), SS 0.5(2), SS 5(3), CC 0.5(4), CC 5 (5)

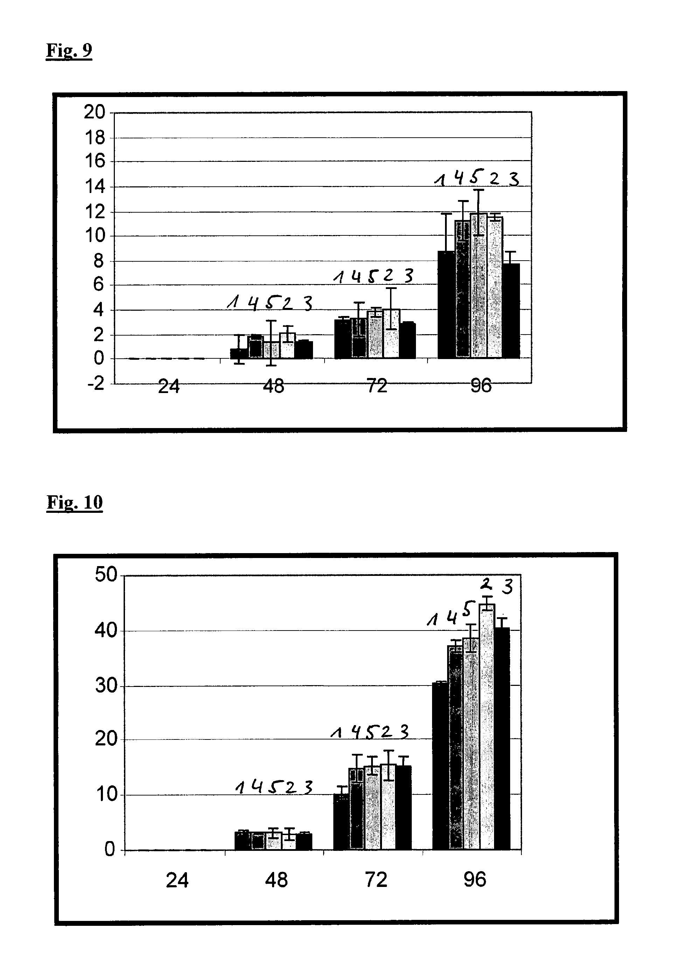

**Fig. 9** The effect of a solubilized seed suspension *of Lupinus albus* (**SS**) at different concentrations [0.5 mg /l and 5 mg / l distilled water] on the coleoptile growth of cabbage seedlings. A commercially available bio-stimulant, *ComCat*® *(**CC**),* was used as a positive control and water as a negative control.
X-axis: time (h); Y-axis: length (mm), water (1), SS 0.5(2), SS 5(3), CC 0.5(4), CC 5 (5).
**Fig. 10** The effect of a solubilized seed suspension of *Lupinus albus* (**SS**) at different concentrations [0.5 mg / l and 5 mg / l distilled water] on the root growth of Cabbage seedlings. A commercially available bio-stimulant, *ComCat*® *(**CC**)*, was used as a positive control and water as a negative control.
X-axis: time (h); Y-axis: length (mm), water (1), SS 0.5(2), SS 5(3), CC 0.5(4), CC 5 (5).

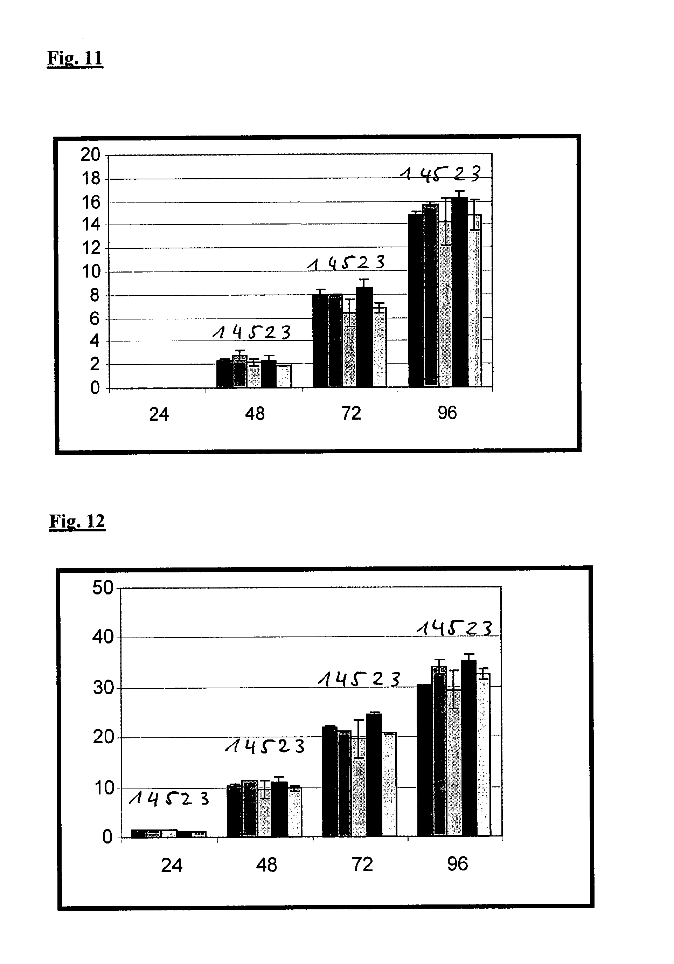

**Fig. 11** The effect of a solubilized seed suspension of *Lupinus albus* (**SS**) at different concentrations [0.5 mg / l and 5 mg / l distilled water] on the coleoptile growth of Lettuce seeds. A commercially available bio-stimulant, *ComCat® (**CC**)*, was used as a positive control and water as a negative control.
X-axis: time (h); Y-axis: length (mm), water (1), SS 0.5(2), SS 5(3), CC 0.5(4), CC 5 (5).
**Fig. 12** The effect of a solubilized seed suspension *of Lupinus albus* (**SS**) at different concentrations [0.5 mg / l and 5 mg / l distilled water] on the root growth of lettuce seedlings. A commercially available bio-stimulant, *ComCat® (**CC**)*, was used as a positive control and water as a negative control.
X-axis: time (h); Y-axis: length (mm), water (1), SS 0.5(2), SS 5(3), CC 0.5(4), CC 5 (5).

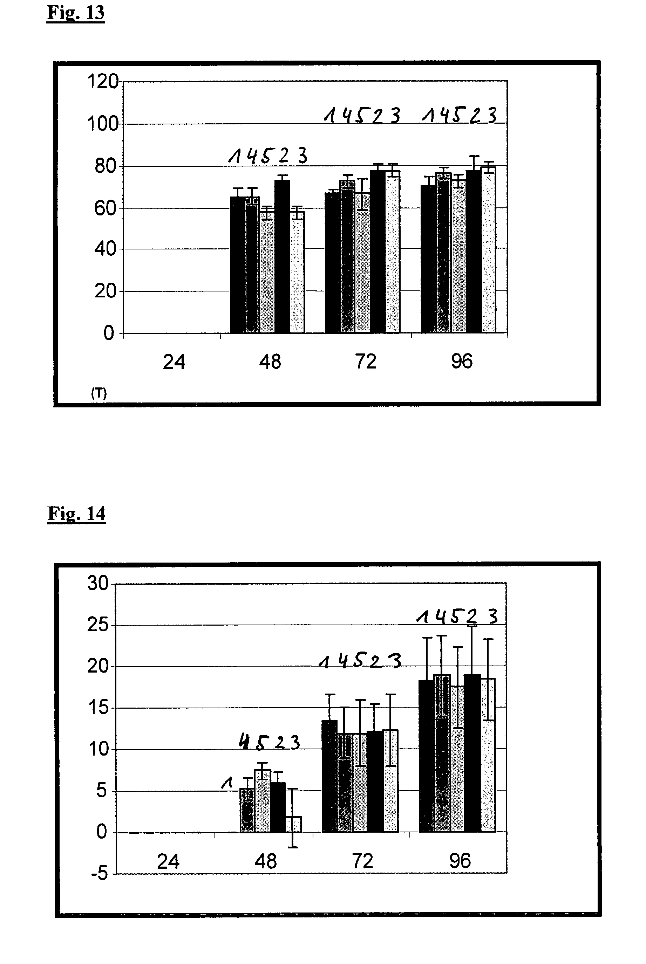

**Fig. 13** The effect of a solubilized seed suspension of *Lupinus albus* (**SS**) at different concentrations [0.5 mg / l and 5 mg / l distilled water] on the percentage germination of Bean seeds. A commercially available bio-stimulant, *ComCat*® *(CC)*, was used as a positive control and water as a negative control.
X-axis: time (h); Y-axis: % germination, water (1), SS 0.5(2), SS 5(3), CC 0.5(4), CC 5 (5)
**Fig. 14** The effect of a solubilized seed suspension of *Lupinus albus* (**SS**) at different concentrations [0.5 mg / l and 5 mg / l distilled water] on the coleoptile growth of bean seedlings. A commercially available bio-stimulant, *ComCat*® *(**CC**)*, was used as a positive control and water as a negative control.
X-axis: time (h); Y-axis: length (mm), water (1), SS 0.5(2), SS 5(3), CC 0.5(4), CC 5 (5).

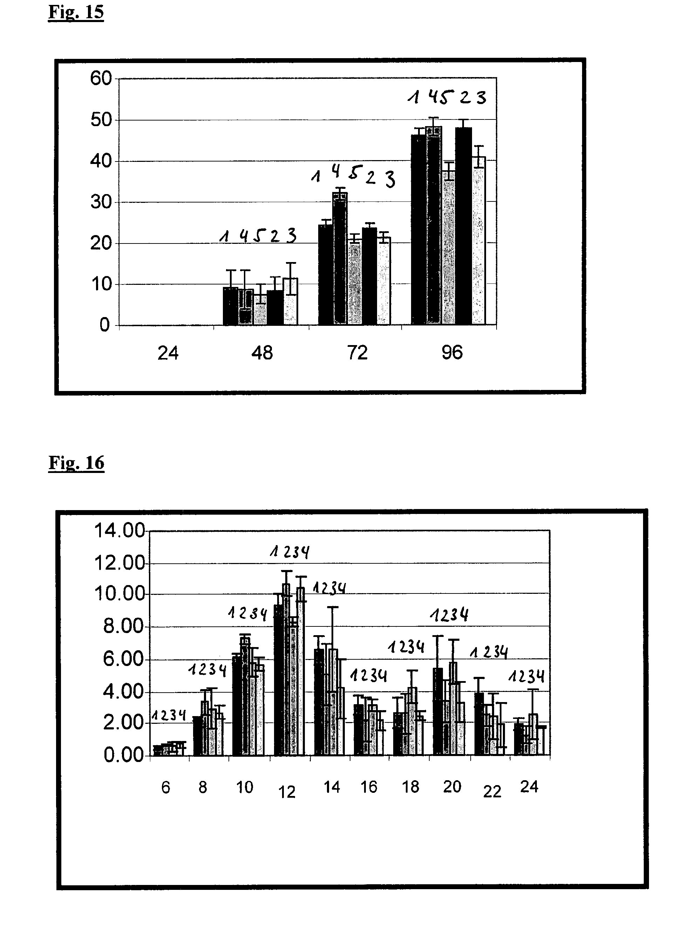

**Fig. 15** The effect of a solubilized seed suspension of *Lupinus albus* (**SS**) at different concentrations [0.5 mg / l and 5 mg / l distilled water] on the root growth of bean seedlings. A commercially available bio-stimulant, *ComCat*® *(**CC**)*, was used as a positive control and water as a negative control.
X-axis: time (h); Y-axis: length (mm), water (1), SS 0.5(2), SS 5(3), CC 0.5(4), CC 5 (5)
**Fig. 16****:** The effect of a solubilized *Lupinus albus* (**SS**) seed suspension applied as a foliar spray at a concentration of 5 mg / l on the flowering response of *Gazania*. A commercial bio-stimulant, *ComCat® (**CC**)*, was used as a positive control both separately and in combination with SS. A standard fertilization treatment served as a negative control. X-axis: time (weeks); Y-axis: number of flowers, Control (1), CC(2), SS(3) CC+SS(4).

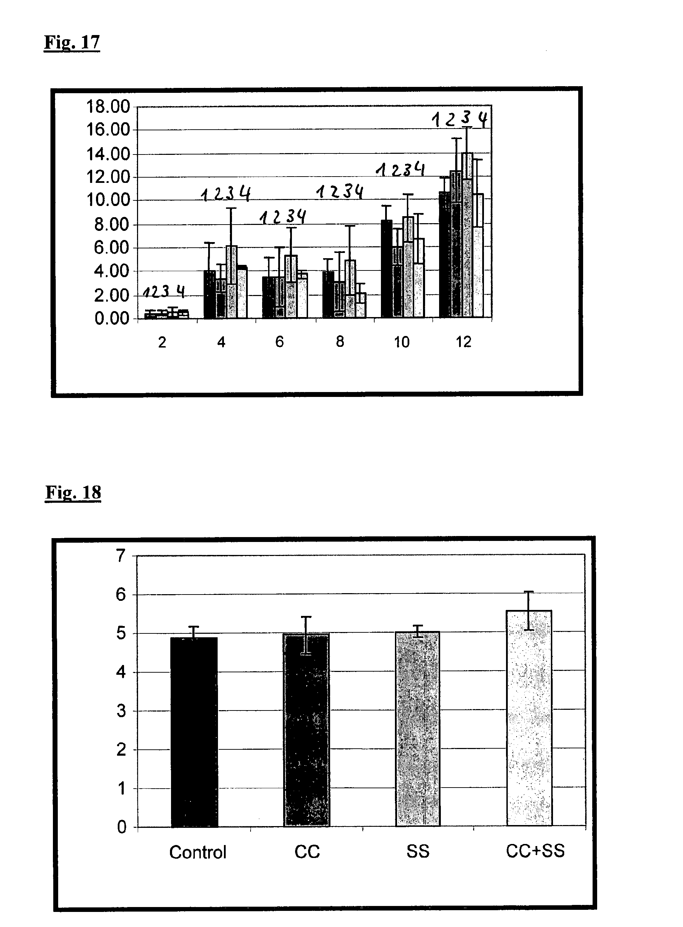

**Fig. 17****:** The effect of a solubilized *Lupinus albus* (**SS**) seed suspension applied as a foliar spray at a concentration of 5 mg / l on the flowering response of Impatience. A commercial bio-stimulant, *ComCat*® *(**CC**)*, was used as a positive control both separately and in combination with SS. A standard fertilization treatment served as a negative control. X-axis: time (weeks); Y-axis: number of flowers, Control (1), CC(2), SS(3) CC+SS(4).
**Fig. 18****:** The effect of a solubilized *Lupinus albus* (**SS**) seed suspension applied as a foliar spray at a concentration of 5 mg / l on the dry kernel mass of maize under rain fed conditions. A commercial bio-stimulant, *ComCat® (**CC**)*, was used as a positive control both separately and in combination with SS. A standard fertilization treatment served as a negative control. Y-axis: yield (ton/ha).

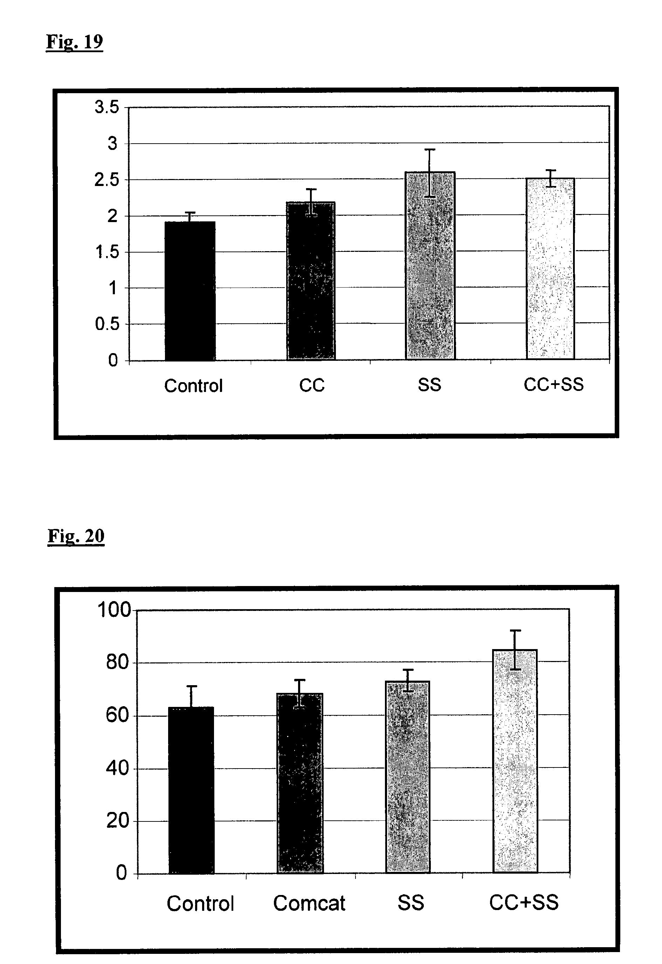

**Fig. 19****:** The effect of a solubilized *Lupinus albus* (**SS**) seed suspension applied as a foliar spray on the dry kernel mass of wheat under semi-irrigation conditions. A commercial bio-stimulant, *ComCat*® *(**CC**)*, was used as a positive control both separately and in combination with SS. A standard fertilization treatment served as a negative control.
Y-axis: yield (ton/ha).
**Fig. 20****:** The effect of a solubilized *Lupinus albus* (**SS**) seed suspension applied as a foliar spray on the beetroot yield under irrigation conditions. A commercial bio-stimulant, *ComCat® (**CC**)*, was used as a positive control both separately and in combination with SS. A standard fertilization treatment served as a negative control. Y-axis: yield (ton/ha).

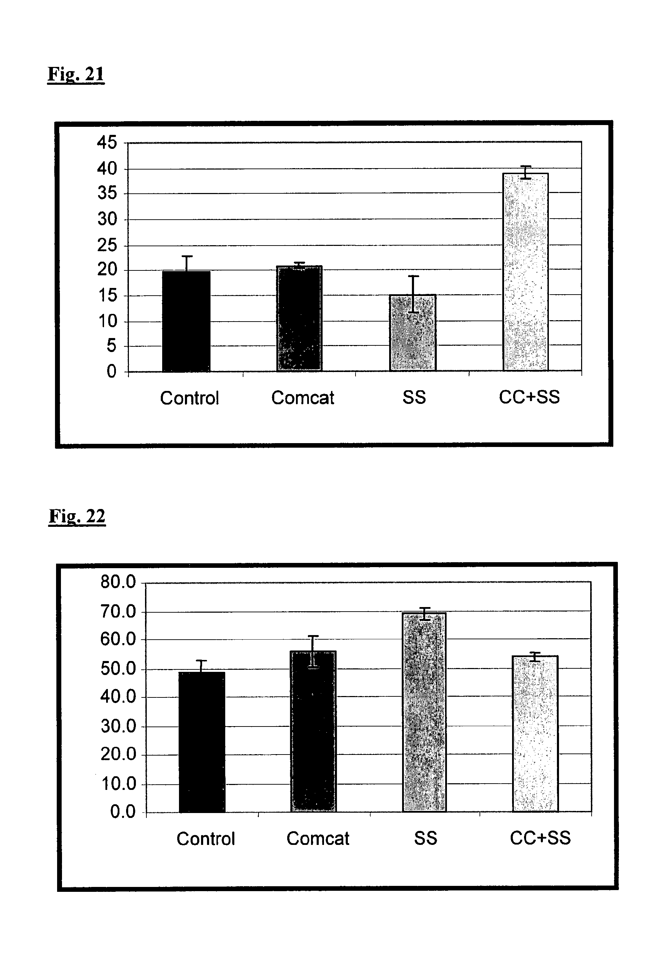

**Fig. 21****:** The effect of a solubilized *Lupinus albus* (**SS**) seed suspension applied as a foliar spray on the foliage fresh mass of beetroot under irrigation conditions. A commercial bio-stimulant, *ComCat*® *(**CC**)*, was used as a positive control both separately and in combination with SS. Y-axis: leaves (ton/ha).
**Fig. 22****:** The effect of a solubilized *Lupinus albus* (**SS**) seed suspension applied as a foliar spray on the head fresh mass of lettuce under irrigation conditions. A commercial bio-stimulant, *ComCat*® *(**CC**)*, was used as a positive control both separately and in combination with SS. Y-axis: yield (ton/ha).

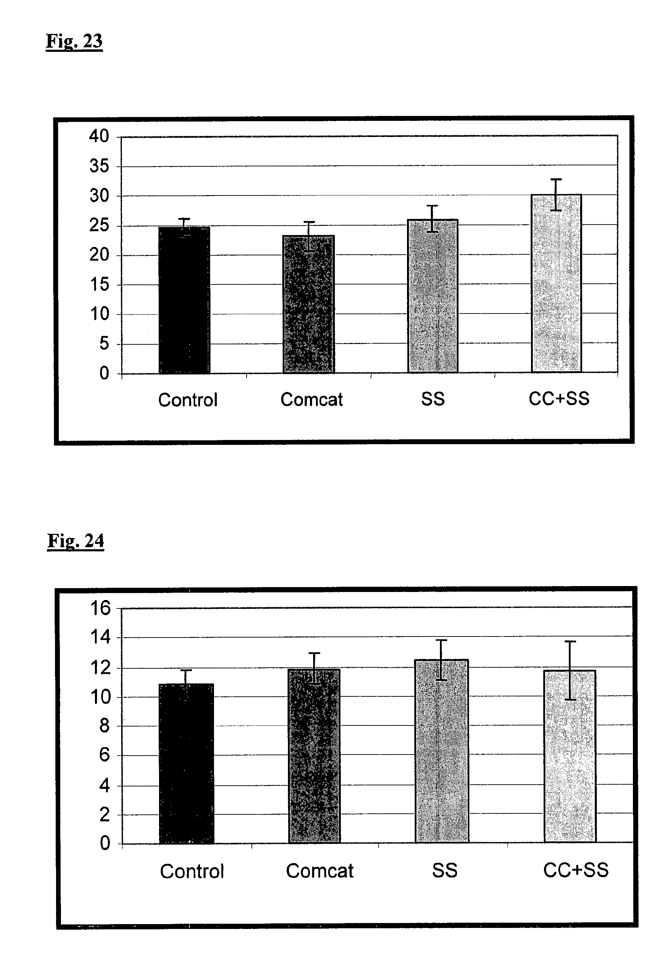

**Fig. 23****:** The effect of a solubilized *Lupinus albus* (**SS**) seed suspension applied as a foliar spray on the foliage fresh mass of lettuce under irrigation conditions. A commercial bio-stimulant, *ComCat*® *(**CC**)*, was used as a positive control both separately and in combination with SS. Y-axis: leave mass (ton/ha)..
**Fig. 24****:** The effect of a solubilized *Lupinus albus* (**SS**) seed suspension applied as a foliar spray on the foliage fresh mass of cabbage under irrigation conditions. A commercial bio-stimulant, *ComCat*® *(**CC**)*, was used as a positive control both separately and in combination with SS. Y-axis: leave mass (ton/ha).

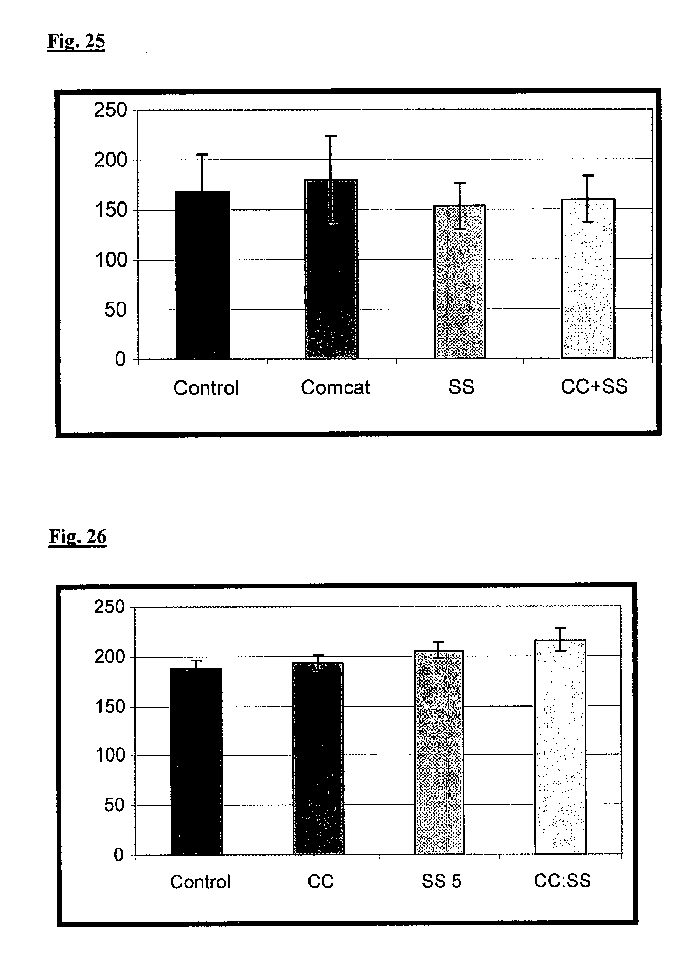

**Fig. 25****:** The effect of a solubilized *Lupinus albus* (**SS**) seed suspension applied as a foliar spray on the head fresh mass of cabbage under irrigation conditions. A commercial bio-stimulant, *ComCat*® *(**CC**)*, was used as a positive control both separately and in combination with SS. Y-axis: yield (ton/ha)..
**Fig. 26****:** The effect of a solubilized *Lupinus albus* (**SS**) seed suspension applied as a foliar spray on the length of carrots under irrigation conditions. A commercial bio-stimulant, *ComCat*® *(**CC**)*, was used as a positive control both separately and in combination with SS.
A standard fertilization treatment served as a negative control. Y-axis: length (mm).

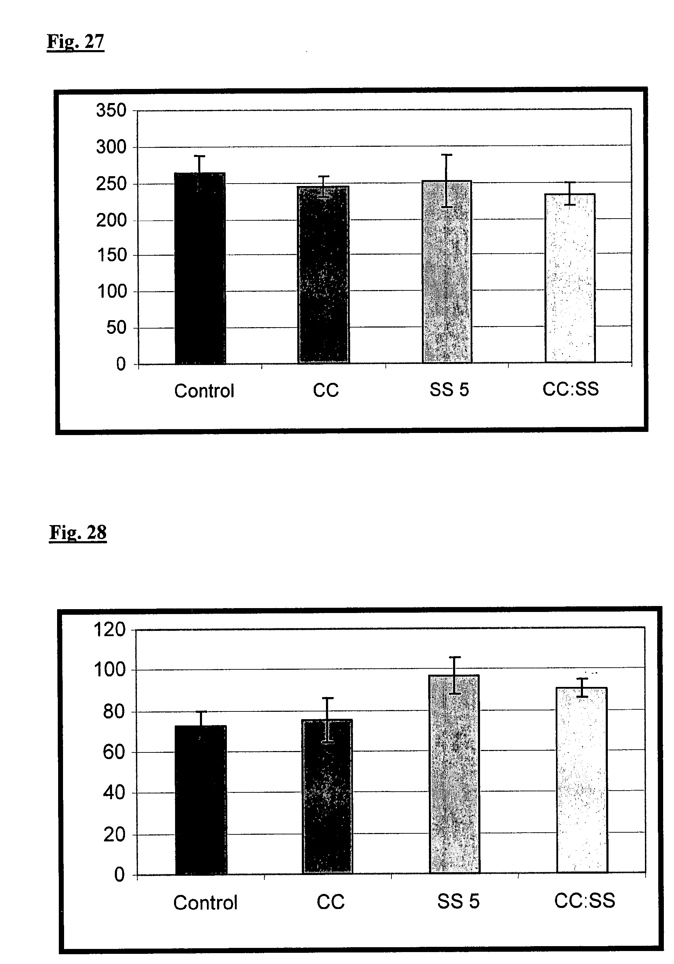

**Fig. 27****:** The effect of a solubilized *Lupinus albus* (**SS**) seed suspension applied as a foliar spray on the foliage fresh mass of carrots under irrigation conditions. A commercial bio-stimulant, *ComCat*® *(**CC**)*, was used as a positive control both separately and in combination with SS. Y-axis: Leave mass (g).
**Fig. 28****:** The effect of a solubilized *Lupinus albus* (**SS**) seed suspension applied as a foliar spray on the carrot yield under irrigation conditions. A commercial bio-stimulant, *ComCat*® *(**CC**)*, was used as a positive control both separately and in combination with SS. A standard fertilization treatment served as a negative control. Y-axis: yield (ton/ha) **(D) TABLES:**

**Table 1**

| Statistical analysis of the interaction between pooled water control values and averaged treatment (CC and SS) values for the respiration rate of yeast cells after 3h of incubation as influenced by different concentrations | | |
|---|---|---|
| Concentration (mg / l) | Treatments | |
| | ***CC*** | **SS** |
| **0** | 38.3 | 38.3 |
| **0.05** | 65.3 | 61.6 |
| **0.5** | 56.6 | 58.6 |
| **5** | 51.0 | 65.6 |
| **50** | 62.6 | 70.3 |

**Table 2**

| **Statistical analysis of the averaged values for the effect of both (CC and SS) treatments on seed germination of Cress seeds after a 96 h incubation period as influenced by different concentrations and as compared to the water control** | |
|---|---|
| **Concentration (mg / l)** | **Pooled and averaged germination data for both treatments at different concentrations** |
| **0** | 62.5 |
| **0.05** | 70.0 |
| **0.5** | 73.8 |
| **5** | 71.3 |
| **50** | 68.8 |

**Table 3**

| **Statistical analysis of the interaction between pooled water control values and averaged treatment (CC and SS) values for coleoptile growth of Cress seeds after a 96h incubation period as influenced by different concentr.** | | |
|---|---|---|
| **Concentration** | **Treatments** | |
| **mg / l** | ***CC*** | **SS** |
| **0** | 30.7 | 30.7 |
| **0.05** | 23.1 | 33.3 |
| **0.5** | 32.1 | 30.2 |
| **5** | 22.5 | 34.9 |
| **50** | 28.7 | 37.1 |

**Table 4**

| **Statistical analysis of the averaged values for the effect of treatments (CC and SS) on the root growth of Cress seeds at 96 h as influenced by the 5 mg / concentration only and as compared to the water control** | |
|---|---|
| **Catalyst** | **Treatments** |
| **Water** | 54.65 |
| **CC** | 47.9 |
| **SS** | 64.7* |

**Table 5**

| **Statistical analysis of the interaction between averaged values for the effect of treatments (CC and SS) on the percentage seed germination of cauliflower seeds at different time intervals over a 96 h incubation period as influenced by different concentrations and as compared to the water control** | | | | | |
|---|---|---|---|---|---|
| Time | **Effect on seed germination and interactions between treatments over time** | | | | |
| | **Water** | ***CC* 0.5** | ***CC* 5** | **SS 0.5** | **SS 5** |
| **24 h** | 20.0 | 25.0 | 40.0 | 32.2 | 32.8 |
| **48 h** | 100.0 | 95.0 | 92.2 | 100.0 | 100.0 |
| **72 h** | 100.0 | 95.0 | 95.0 | 100.0 | 100.0 |
| **96 h** | 100.0 | 95.0 | 100.0 | 100.0 | 100.0 |

**Table 6**

| **Statistical analysis of the interaction between averaged values for the effect of treatments (CC and SS) on the coleoptile growth of cauliflower seedlings at different time intervals over a 96 h incubation period as influenced by different concentrations and as compared to the water control** | | | | | |
|---|---|---|---|---|---|
| Time | **Effect on coleoptile growth and interactions between treatments -over time** | | | | |
| | **Water** | ***CC* 0.5** | ***CC* 5** | **SS 0.5** | **SS 5** |
| **24 h** | 0 | 0 | 0 | 0 | 0 |
| **48 h** | 3.24 | 3.3 | 2.7 | 3.3 | 3.3 |
| **72 h** | 9.10 | 9.6 | 8.6 | 8.8 | 9.8 |
| **96 h** | 16.25 | 19.1 | 18.1 | 17.4 | 19.0 |

**Table 7**

| **Statistical analysis of the interaction between averaged values for the effect of treatments (CC and SS) on the root growth of cauliflower seedlings at different time intervals over a 96 h incubation period as influenced by different concentrations and as compared to the water control.** | | | | | |
|---|---|---|---|---|---|
| Time | **Effect on root growth and interactions between treatments -over time** | | | | |
| | **Water** | ***CC* 0.5** | ***CC* 5** | **SS 0.5** | **SS 5** |
| **24 h** | 0 | 0 | 0 | 0 | 0 |
| **48 h** | 8.12 | 8.2 | 7.5 | 3.3 | 8.6 |
| **72 h** | 24.1 | 23.7 | 23.7 | 8.8 | 29.6 |
| **96 h** | 40.4 | 40.6 | 42.5 | 17.4 | 49.6 |

**Table 8**

| **Statistical analysis of the interaction between averaged values for the effect of treatments (CC and SS) on the percentage seed germination of cabbage seeds at different time intervals over a 96 h incubation period as influenced by different concentrations and as compared to the water control** | | | | |
|---|---|---|---|---|
| **Effect on seed germination and interactions between treatments -over time** | | | | |
| **Water** | ***CC* 0.5** | ***CC* 5** | **SS 0.5** | **SS 5** |
| 0 | 0 | 0 | 10.0 | 0 |
| 72.2 | 75.0 | 80.0 | 95.0 | 75.0 |
| 77.2 | 82.8 | 82.2 | 97.8 | 75.0 |
| 88.8 | 85.0 | 91.8 | 97.8 | 77.8 |

**Table 9**

| **Statistical analysis of the interaction between averaged values for the effect of treatments (CC and SS) on the coleoptile growth of cabbage seedlings at different time intervals over a 96 h incubation period as influenced by different concentrations and as compared to the water control.** | | | | |
|---|---|---|---|---|
| **Effect on coleoptile growth and interactions between treatments -over time** | | | | |
| **Water** | ***CC 0.5*** | ***CC* 5** | **SS 0.5** | **SS 5** |
| 0 | 0 | 0 | 0 | 0 |
| 0.9 | 1.8 | 1.1 | 2.1 | 1.4 |
| 3.2 | 3.1 | 3.8 | 4.2 | 2.9 |
| 8.5 | 11.1 | 11.7 | 11.5 | 7.7 |

**Table 10**

| **Statistical analysis of the interaction between averaged values for the effect of treatments (CC and SS) on the root growth of cabbage seedlings at different time intervals over a 96 h incubation period as influenced by different concentrations and as compared to the water control.** | | | | |
|---|---|---|---|---|
| **Effect on root growth and interactions between treatments -over time** | | | | |
| **Water** | ***CC* 0.5** | ***CC* 5** | **SS 0.5** | **SS 5** |
| 0 | 0 | 0 | 0 | 0 |
| 3.0 | 3.1 | 3.2 | 3.0 | 3.0 |
| 10.3 | 14.6 | 15.4 | 15.6 | 14.9 |
| 30.2 | 36.9 | 38.2 | 45.6 | 39.7 |

**Table 11**

| **Statistical analysis of the interaction between averaged values for the effect of treatments (CC and SS) on the coleoptile growth of lettuce seedlings at different time intervals over a 96 h incubation period as influenced by different concentrations and as compared to the water control.** | | | | |
|---|---|---|---|---|
| **Effect on coleoptile growth and interactions between treatments -over time** | | | | |
| **Water** | ***CC* 0.5** | ***CC* 5** | **SS 0.5** | **SS 5** |
| 0 | 0 | 0 | 0 | 0 |
| 2.4 | 2.8 | 2.2 | 2.4 | 1.9 |
| 7.9 | 7.9 | 6.4 | 8.6 | 6.8 |
| 14.7 | 15.7 | 14.3 | 16.2 | 14.7 |

**Table 12**

| **Statistical analysis of the interaction between averaged values for the effect of treatments (CC and SS) on the root growth of lettuce seedlings at different time intervals over a 96 h incubation period as influenced by different concentrations and as compared to the water control.** | | | | |
|---|---|---|---|---|
| **Effect on root growth and interactions between treatments -over time** | | | | |
| **Water** | ***CC* 0.5** | ***CC* 5** | **SS 0.5** | **SS 5** |
| 1.4 | 1.5 | 1.6 | 1.1 | 1.0 |
| 10.4 | 11.4 | 9.8 | 11.1 | 9.7 |
| 21.9 | 21.0 | 19.9 | 24.3 | 20.7 |
| 30.3 | 33.9 | 29.7 | 35.0 | 32.2 |

**Table 13**

| **Statistical analysis of the interaction between averaged values for the effect of treatments (CC and SS) on the percentage germination of bean seeds at different time intervals over a 96 h incubation period as influenced by different concentrations and as compared to the water control.** | | | | | |
|---|---|---|---|---|---|
| Time | **Effect on seed germination and interactions between treatments -over time** | | | | |
| | **Water** | ***CC* 0.5** | ***CC* 5** | **SS 0.5** | **SS 5** |
| **24 h** | 0 | 0 | 0 | 0 | 0 |
| **48 h** | 65.0 | 65.0 | 57.5 | 72.5 | 57.5 |
| **72 h** | 66.3 | 72.5 | 66.3 | 77.5 | 77.5 |
| **96 h** | 70.0 | 76.3 | 72.5 | 77.5 | 78.8 |

**Table 14**

| **Statistical analysis of the interaction between averaged values for the effect of treatments (CC and SS) on the coleoptile growth of bean seedlings at different time intervals over a 96 h incubation period as influenced by different concentrations and as compared to the water control** | | | | |
|---|---|---|---|---|
| **Effect on coleoptile growth and interactions between treatments -over time** | | | | |
| **Water** | ***CC* 0.5** | ***CC* 5** | **SS 0.5** | **SS 5** |
| 0.0 | 0.0 | 0.0 | 0.0 | 0.0 |
| 0.0 | 5.2 | 7.0 | 5.8 | 2.1 |
| 12.9 | 11.0 | 10.5 | 14.4 | 12.5 |
| 16.9 | 19.6 | 17.8 | 19.1 | 19.9 |

**Table 15**

| **Table 3.16: : Statistical analysis of the interaction between averaged values for the effect of treatments (*CC* and SS) on the root growth of bean seedlings at different time intervals over a 96 h incubation period as influenced by different concentrations and as compared to the water control** | | | | |
|---|---|---|---|---|
| **Effect on root growth and interactions between treatments -over time** | | | | |
| **Water** | ***CC* 0.5** | ***CC* 5** | **SS 0.5** | **SS 5** |
| 0 | 0 | 0 | 0 | 0 |
| 9.25 | 8.74 | 7.50 | 8.30 | 11.37 |
| 24.41 | 32.08 | 21.03 | 23.54 | 21.36 |
| 45.92 | 48.12 | 37.49 | 47.65 | 40.78 |

**Table 16: Flower trial production guide**

| **Flower** | **Gazanias** | **Impatience** |
|---|---|---|
| **Replications** | 3 | 3 |
| **Between row spacing** | 12.5 cm | 12.5 cm |
| **In row spacing** | 12.5 cm | 12.5 cm |
| **Plants/ha** | 40 000 | 40 000 |
| **Fertilzer/ha:** | | |
| **N** | 40 kg ha⁻¹ | 40 kg ha⁻¹ |
| **P** | 20 kg ha⁻¹ | 20 kg ha⁻¹ |
| **K** | 0 kg ha⁻¹ | 0 kg ha⁻¹ |

**Table 17: Grain trial production guide**

| Crop | Maize | Wheat |
|---|---|---|
| Cultivar | PAN 6043 | PAN 3377 |
| Replications | 4 | 4 |
| Between row spacing | 2.4 m | - |
| In row spacing | 27 cm | 45 cm |
| Plants/ha | 17 050 | 20-25kg seed |
| Yield potential | 3.6 ton ha⁻¹ | 2.5 ton ha⁻¹ |
| Fertilizer/ha: | | |
| N | 70 kg ha⁻¹ | 45-60 kg ha' |
| P | 15-20 kg ha⁻¹ | 15 kg ha⁻¹ |
| K | 0 kg ha⁻¹ | 7-8 kg ha⁻¹ |

**Table 18: Vegetable trial production guide**

| Vegetable | Beetroot | Lettuce | Cabbage | Carrots |
|---|---|---|---|---|
| Cultivar | Detroit dark red | Great Lakes | Drumhead | Snakpak |
| Replications | 3 | 3 | 3 | 4 |
| etween row spacing | 30 cm | 35 cm | 65cm | 20cm |
| In row spacing | 10 cm | 25 cm | 45 cm | 5 cm |
| Plants/ha | 333 333 | 125 000 | 57 142 | 2 million |
| Yield potential | 25-40 ton | 25-30 ton | 60 ton | 70 tons |
| Fertilizer/ha: | | | | |
| N | 72.5 kg ha⁻¹ | 67.5 kg ha⁻¹ | 204 kg ha⁻¹ | 800 kg 2:3:2 ha⁻¹ |
| P | 12.5 kg ha⁻¹ | 8.5 kg ha⁻¹ | 36 kg ha⁻¹ | - |
| K | 172.5 kg ha⁻¹ | 121.5 kg ha⁻¹ | 216 kg ha⁻¹ | - |

### (E) The effect of a L. albus seed suspension (SS) on the respiration rate of monoculture yeast cells

No significant differences in the respiration rate of monoculture yeast cells between SS treatments at concentrations of 0.05 mg / l (Figure 1A) and 0.5 mg / l (Figure 1B) and the *ComCat®* (*CC*) control can be observed (see calculated LSD-values indicated in each graph). However, at a concentration of 5 mg / l (Figure 1C) SS increases the respiration rate of yeast cells significantly by 89% after 3 hours of incubation compared to the water control, while respiration rate enhancement calculated for the commercial bio-stimulant (*CC*) is also significant (46%). The same significant respiration rate enhancement in yeast cells by SS (84%) can be observed at a concentration of 50 mg / l (Figure 1D) while that by CC is also significant, although the respiration rate enhancement is slightly less (63%).

An overall statistical analysis of pooled water control values and averaged treatment (CC and SS) values shows a significant interaction in terms of both concentration and treatment for the respiration rate of yeast cells after 3h of incubation (Table 1; see the calculated LSD-value presented below the table). This indicates that the increase in the respiration rate of yeast cells under the influence of these treatments is significantly different from the water control for all concentrations tested, although the CC and SS treatments are not necessarily significantly different from each other at specific concentrations (e.g. treatment at 0.05 and 0.5 mg / l). In order to verify whether the increase in the respiration rate of yeast cells is an indication of a positive or negative influence in terms of growth, the effect is tested on seed germination and subsequent seedling growth using seeds of different crop plants.

### (F) The effect of a L. albus seed suspension (SS) on the germination of Cress seeds

No significant differences in the percentage germination of Cress seeds can be observed between the different treatments (CC, SS and the water control; Figure 2A, B, C and D; see calculated LSD-values indicated in each graph). However, the overall statistical analysis of pooled values for the treatments at specific concentrations, as well as the water control, shows significant differences between the application concentrations (Table 2). The results reveal 0.5 mg / l (Figure 2B) and 5 mg / l (Figure 2C) as the best application concentrations for both CC and SS in terms of their stimulatory effect on seed germination. Subsequently, the effect of the different treatments on seedling growth, by quantifying coleoptile (Figure 3) and root growth (Figure 4), are investigated.

### (G) The effect of a L. albus seed suspension (SS) on the growth of Cress seedlings

Except for the 0.5 mg / l *ComCat*^{®} concentration (Figure 3B) that has no significant effect on coleoptile growth of Cress seedlings, all other concentrations show an inhibitory effect, although not significant in all cases (Figure 3A, C and D). In comparison, SS has no inhibitory effect on coleoptile growth but only the 50 mg / l concentration (Figure 3D) significantly enhanced coleoptile growth in Cress seedlings. Interactions between pooled treatment values of the two bio-stimulants as well as the application concentrations confirm both the non-effect by *Comcat®* as well as the significant effect of SS on the coleoptile growth of Cress seedlings, but only at a concentration of 50 mg / l (Table 3). Similar measurements can be made to quantify the effect of the bio-stimulants on root growth (Figure 4).

Compared to the water control, exactly the same tendency for the *ComCat*^{®} effect on root growth (Figure 4A, B, C and D), as is seen for its effect on coleoptile growth, can be observed except that all concentrations tested show significant inhibition of root growth. Similarly, the SS treatment, at concentrations of 5 mg / 1 and 50 mg / l show significant stimulation of root growth (Figure 4C and D) as is the case for coleoptile growth. The latter also differs significantly from the *CC* treatment in this regard. Overall the seed suspension shows the best root growth enhancement at a concentration of 5 mg / l (Figure 4C).

Statistical analysis of the pooled and averaged treatment values, for the 5 mg / l concentration only, reveals significant differences between *CC* and SS with regard to root growth enhancement in Cress seedlings (Table 4). It becomes clear that the bio-stimulatory effect of SS on both coleoptile and root growth is concentration dependant and that *CC* had either no effect on the growth of Cress seedlings or an inhibitory effect.

Subsequently, the screening process can be expanded to seeds and seedlings of five different crops. As the manufacturers of *CC* claimed the 0.5 mg / l concentration to be optimal for bio-stimulation of crop plants and the minimum stimulatory concentration (MSC) of SS can be found to be 5.0 mg / l, using Cress seedlings as test organism, only these two concentrations were applied in the extended screening program.

### (H) The effect of a L. albus seed suspension (SS) on seed germination and seedling growth of different crops

### (1) Cauliflower

Significant differences in the percentage germination of cauliflower seeds can be observed between the different treatments but only after 24 h of incubation (Figure 5, see calculated LSD-values indicated in the graph). Incubation at 48h, 72h and 96 h showed no significant differences between the treatments and the control.

Statistical analysis of the pooled and average values, reveal significant differences between CC and SS in terms of the percentage seed germination but again only at the 24 h incubation period (Table 5). *Comcat*®, at a concentration of 5 mg / 1, has the most significant enhancing effect on the germination of cauliflower seeds, followed by SS at concentrations of 5 mg / l and 0.5 mg / l respectively. However, neither treatment has any effect on seed germination during later incubation intervals compared to the water control.

Subsequently, the effect of these treatments on the growth of cauliflower seedlings was followed. Although not during early incubation intervals, both *CC* at 0.5 mg / l and *SS* at 5.0 mg / l have a significant enhancing effect on the coleoptile growth of cauliflower seedlings at 96 h of incubation compared to the untreated control (Figure 6). This can be confirmed by the statistical analysis of pooled and averaged values for the 96 h incubation period (Table 6). Both at the 72 h and 96 h incubation intervals *SS* at a concentration of 5 mg / l significantly enhance root growth of cauliflower seedlings, compared to both the positive (*CC*) and negative (water) controls (Figure 7), and this is confirmed by the statistical analysis of pooled and averaged values (Table 7). However, *SS* at a concentration of 0.5 mg / l significantly inhibits root growth at all incubation intervals.

### (2) Cabbage

As shown in Figure 8, *SS* at a concentration of 0.5 mg / 1 is the only treatment that has a significant enhancing effect on the percentage germination of cabbage seeds over the full duration of the incubation period, as compared to both controls (also see the statistical analysis of pooled and averaged data in Table 8). However, *SS* at a ten-fold higher concentration of 5 mg / l has a significant inhibiting effect on the germination of cabbage seeds, especially after 96 h of incubation, as compared to both controls. The commercial bio-stimulant, *CC*, shows no significant effect.

At 96 h of incubation the 0.5 mg / l *SS* treatment as well as treatment with both concentrations of *CC* significantly enhances the coleoptile growth of cabbage seedlings while the 5.0 mg / l *SS* treatment significantly inhibits growth. (Figure 9; Table 9).

Exactly the same tendency of *SS* and *CC* treatments to significantly enhance root growth, as can be seen for coleoptile growth, prevailed at the 96 h incubation interval except that both *SS* concentrations have the same stimulating effect (Figure 10). Further, these significant differences can be already observed at the 72 h incubation interval compared to the untreated control. Statistical analysis of pooled and averaged data confirms that the 0.5 mg /l *SS* and *CC* treatments also differed significantly in favour of the former (Table 10).

### (3) Lettuce

Different concentrations of *CC* and *SS* have varied effects on the coleoptile growth of lettuce seedlings. Both *CC* and SS applied at the higher concentrations of 5 mg / l tend to inhibit coleoptile growth at all incubation intervals while the lower concentration of 0.5 mg /l significantly enhances coleoptile growth of lettuce seedlings in both cases especially at the 96 h incubation interval (Figure 11) as it is confirmed by the statistical analysis of pooled and averaged data (Table 11).

Compared to the water control, both *CC* and SS significantly enhance the root growth of lettuce seedlings at a concentration of 0.5 mg / l at 96 h of incubation (Figure 12) while the higher concentration either has no effect or the effect is not significant. Statistical analysis of the pooled and averaged values shows no significant differences between treatments at the earlier incubation intervals (Table 12) except at 72 h where *SS* is the only treatment that shows a significant enhancing effect on root growth of lettuce seedlings.

### (4) Beans

Only treatment with *SS* has a significant enhancing effect on the germination of bean seeds at 72 h and 96 h incubation intervals compared to the untreated control while the effect of the two concentration applications do not differ (Figure 13). Compared to the positive control, the 5 mg / l *SS* treatment differs significantly in terms of the germination of bean seeds at the 72 h incubation interval (Table 13).

Neither the CC nor the SS treatments have any significant effect on the coleoptile growth of bean seedlings (Figure 14; Table 14).

Only the 0.5 mg / l CC treatment has a significant enhancing effect on the root growth of bean seedlings, and also only at the 72 h incubation interval, while all other treatments either have no effect or tend to inhibit root growth (Figure 15; Table 15).

According the results mentioned above it becomes clear that the application concentration seems to be effective at both 0.5 and 5 mg / l depending on the type of organism applied to.

### (I) Influence of a Lupinus albus seed suspension on yield and yield components of different crops under FIELD conditions

A seed suspension of *Lupinus albus,* is tested and compared to a commercially available bio-stimulant, *ComCat*^{®}, in terms of its potential to increase the yield of different crops under field conditions. *ComCat*^{®} serves as a positive control while basic fertilizer served as a negative control in all field trials.

In some cases *ComCat*^{®} and SS are also tested in combination.

All trials were laid out in a complete randomized block design while different yield parameters were measured. The results indicated that the effect of *SS* on yield was concentration dependent. Under field conditions a concentration of 5 mg / l is optimal for most vegetables, flowers, maize and wheat. Flower budding is significantly (P<0.05) enhanced in Gazanias but, although the SS treatment increases flowering in Impatience, this is non-significant. The dry kernel yield of maize under rain fed conditions as well as that of wheat under semi-irrigation is also enhanced by foliar spray treatment with SS, but this is only significant in the case of maize. The most significant yield enhancement, after treatment with SS, was observed in beetroot, lettuce and carrots under drip irrigation. Beetroot bulb, lettuce head and carrot yields are significantly (P<0.05) increased by 9.3, 20.0 and 24.3 ton / ha respectively. The results confirm the bio-stimulatory potential of a *Lupinus albus* seed suspension (SS) initially observed under laboratory conditions as described above.

### (J) The response of flowers to a foliar spray treatment with a L. albus seed suspension (SS) under irrigation

### (1) Gazanias

A direct comparison of the number of Gazania flowers counted on a two weekly basis, as a response to the different treatments, revealed statistically significant (P<0.05) differences between the treatments and the untreated control (Figure 16, LSD-value indicated in the graph). Over a 24 week period, two distinct flowering flurries reaching peaks at week 12 and week 20 were observed. The *CC* treatment showed a strong tendency to enhance flower formation up to the twelve week growth stage during the first flurry, while treatment with SS showed the same tendency only at later growth stages during the second flurry. Interestingly, the same tendency to increase the number of flowers up to the twelfth week as was observed for the *CC* treatment was observed where *CC* and SS were applied in combination but, this was not the case between weeks 16 and 20.

### (2) Impatience

In terms of the flowering response of Impatience to exogenously applied SS, and as compared to both the negative (untreated) and positive (*CC*) controls, marked but non-significant (P<0.05) differences were observed (Figure 17; LSD-value indicated in the graph). Foliar applications of SS consistently increased the number of flowers over the full duration of the growth cycle while both the *CC* and *CC*+SS combination treatments rather inhibited flower formation in Impatience. Calculated standard deviation values were rather high indicating large differences between replicates.

### (K) The yield response of grain crops to a foliar spray treatment with a L. albus seed suspension (SS) under rain fed (maize) and semi-irrigation (wheat) conditions

### (1) The yield response of maize under rain fed conditions

Statistical analysis of dry kernel yield data in maize showed a significant difference between the *CC*+SS combination treatment and the untreated control at the 5% probability level (Figure 18; LSD value indicated in the graph). The latter treatment contributed to an increase in dry kernel yield of 680 kg / ha while the slight increases observed after single foliar spray treatments with both *CC* and SS were statistically non-significant.

### (2) The yield response ofwheat under semi-irrigation conditions

Single foliar spray treatments of wheat at the three leaf growth stage with *CC* and SS, both separately and in combination, increased the dry kernel yield markedly compared to the untreated control (Figure 19; LSD value indicated in the graph). However, these differences were only significant (P<0.05) in the case of the SS and *CC*+SS combination treatments. Even though the yield response of wheat to these two treatments compared favourably to the commercial bio-stimulant applied separately as a positive control, the differences were non-significant.

### (L) The yield response of vegetables to foliar spray treatments with a L. albus seed suspension (SS) under irrigation conditions

### (1) Beetroot

Compared to the untreated control, treatment of beetroot with SS at a concentration of 5 mg/l, first at the three leaf growth stage and followed by a second spray at 30% vegetative growth, increased the harvestable yield by 9.3 ton / ha (Figure 20). The latter yield increase was twice that obtained with the commercial bio-stimulant (*CC*). Where *CC* and SS was applied in combination, the yield increase was a staggering and highly significant (P<0.05) 21 ton / ha. In order to verify whether the increase in bulb yield of beetroot was related to the growth of aerial parts, the effect of the different treatments on the foliage was additionally quantified (Figure 21). Although statistically non-significant, a decrease in the fresh foliage mass was observed in the case of the SS treatment when compared to the untreated control. However, as the *CC* treatment had no stimulating effect on foliage growth while the *CC*+SS treatment had a significant elevating effect, no clear tendency emerged in light of the fact that all three treatments increased the bulb yield.

### (2) Lettuce

### Compared to the untreated control, two foliar applications of SS resulted in a significant

20.4 ton / ha increase in the head mass of lettuce (Figure 22). Although treatment with *CC* and CC+SS increased the head mass yield by 6.4 and 4.9 ton / ha respectively, this was not statistically significant. Neither of the treatments had a significant effect on the foliage growth of lettuce (Figure 23).

### (3) Cabbage

Although all treatments had a slight enhancing effect on the foliage fresh mass of cabbage, none were statistically significant (Figure 24). Except for treatment with *CC* that had a slight enhancing effect, SS applied separately and in combination with *CC* tended to decrease the head fresh mass in cabbage but neither of these were statistically significant (Figure 25).

### (4) Carrots

Except for the *CC* treatment that had no effect, SS applied separately and in combination with *CC* significantly increased the length of carrots (Figure 26), compared to the untreated control, while all three treatments tended to decrease the foliage fresh mass (Figure 27), although not significantly. Compared to both the positive and negative controls, SS applied at 5 mg / l increased the carrot yield by an astonishing 24.3 ton / ha (Figure 28). Despite the fact that the commercial bio-stimulant, *ComCat*^{®}, *h*ad no effect on the carrot yield, the treatment in combination with SS significantly increased the carrot yield by 18.0 ton / ha compared to the untreated control. To sum up, both *CC* and SS treatments, e.g. by a single foliar spray treatment, show only a slightly increasing effect on the dry kernel yield of crops, preferably maize, wheat and other grain crops, while the *CC*:SS combination treatment increases the yield very significantly and in a synergistic pattern. This is astonishing since CC alone causes only slight or no significant effects when applied to the respective plants. SS increases the yield with about double the amount in tons per hectare compared to the *Comcat*® treatment Where *CC* and SS are applied in combination a staggering increase in beetroot yield can be observed. However, it should be noted that the degree of synergism seems to depend on the plant species treated with SS, CC and SS + CC. Similar results can be obtained if a combination treatment is carried out with SS + extracts from T. violacea or SS + A. africanus.

### (M) Effect an active compound (I) obtained from a seed suspension of Lupinus albus L. on respiration rate of monoculture yeast cells.

As described in Example 11 an active compound (I) was identified as glycerol trilinoleate.

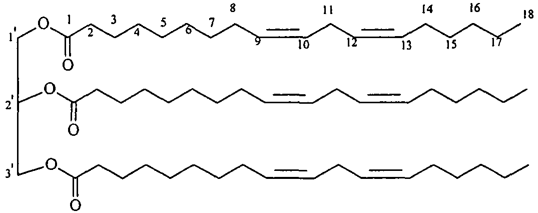

The purified active compound, tested at a concentration of 0.5 mg / l, has a significant effect on the respiration rate of monoculture yeast cells over an incubation period of 90 minutes. After 40 minutes of incubation the pure compound already significantly influences the respiration rate increasing the rate with a staggering 115 % compared to the water control and 26 % compared to CC. Just after 70 minutes the pure compound already reaches the maximum measured respiration rate, while CC only reaches a maximum rate after 90 minutes. The water control still does not reach the maximum rate after 90 minutes of incubation. This indicates that the increase in the respiration rate of yeast cells under the influence of the active compound is significantly different from the water and CC control at a concentration of 0.5 mg/l.

### (N) The effect of a L. albus seed suspension (SS) on the germination of cabbage seeds on the growth of cabbage seedlings

The pure active compound identified as linoleic acid shows a significant effect on the percentage germination of cabbage seeds compared to the water control and *CC*. It seems that the commercial product *CC* inhibits the percentage germination of cabbage seeds.

The pure compound linoleic acid isolated from the seed suspension of *Lupinus albus* significantly effects the seedling growth of cabbage seedlings. Both the coleoptile and root growth are significantly increased by the pure compound. The commercial product, *CC*, also increases the coleoptile length but in a lesser extend than the pure compound. In comparison to this it seems to have no effect or negated the effect on root growth. To confirm this stimulatory effect on growth another biotest was employed known as the wheat leaf unrolling test. Being much more sensitive than the normally employed biotests the extracts can be tested at a much lower concentration of 0.1 mg / l. After 24 h of incubation both the pure compound and the commercial product enhances the growth of wheat coleoptiles, whereas only the pure compound significantly enhances the growth.

### EXAMPLES:

### Example 1: Preparation of a seed suspension

Five hundred grams of *L. albus* seeds were ground to a fine powder using a Kenwood coffee grinder followed by a grinder manufactured in Germany. The powdered seeds were transferred to a plastic tray, spread out over the surface of the tray, covered with pure ethanol (98 - 100%) and left overnight to allow the ethanol to evaporate to dryness. The ethanol treatment was repeated twice over 48 h in an attempt to make the powdered seed more suspendable in water. Subsequently, the ethanol treated seed powder was suspended in water (0.05; 0.5; 5.0 and 50.0 mg/1), hitherto referred to as the seed suspension (SS), and subjected to different bio-assays at different concentrations to determine its bio-stimulatory properties.

### Example 2: Preparation of crude extracts

The fine powder of seeds of Lupinus albus obtained as described in Example 1 were transferred into separate 5-litre Qorpak jars labelled and covered with 100% methanol at a ratio of 2 ml /g dry weight. The lids were closed firmly, sealed with parafilm to prevent leakage and placed on a roller mill for 24 hours. Extraction was performed twice by replacing the methanol. Subsequently, each sample was filtered twice, first under vacuum through a double layer of Whatman filter paper (No. 3 and No.1) using a Buchner funnel and then by gravity through a single sheet of Whatman No. 1 filter paper. Most of the methanol was removed from the extracts by means of vacuum distillation at 35 - 40 °C using a Büchi Rotary Evaporator. On the following day the same procedure was followed with the re-extracted plant material. Final filtrates from the twice extracted plant material were combined and concentrated to dryness under vacuum by means of a Speedvac Concentrator at -140 °C for 24 hours. After determining the dry matter yields, the crude aerial and below soil parts were stored separately at -20 °C for later use.

### Example 3: Screening of the L. albus seed suspension (SS) for bio-stimulatory activity: The effect of a L. albus seed suspension (SS) on the respiration rate of monoculture yeast cells

A glass respirometer with a short bulged section (reservoir) to contain the yeast cells and a long calibrated tube, closed at the top end to collect C02 gas, was used in determining the effect of different concentrations (0.05; 0.5; 5.0 and 50.0 mg/1) of the *L. albus* seed suspension on the respiration rate of monoculture yeast cells. Dry baker's yeast (0.8 g) was placed in the reservoir of the respirometer. Subsequently, 70 ml of each of the SS concentrations containing 5 mg / ml glucose to serve as respiratory substrate for the yeast cells, was added to the respirometer. The apparatus was tilted sideways to release air bubbles trapped in the dry baker's yeast and placed in a water bath pre-heated to 29 °C. *ComCat*^{®}, a commercial biostimulant, was used as a positive control at 0.5 mg/l (optimum concentration according to the manufacturers; Agraforum, Germany) and distilled water as a negative control. However, the same concentration range as was used for SS was also tested for *ComCat*^{®} although the optimum concentration of the latter was previously determined at 0.5 mg/l by the manufacturers. Carbon dioxide release by the yeast cells was measured in cm³ at 30 minute intervals over a three hour incubation period by reading the released gas volume directly from the calibrated tube and replicated six times.

### Example 4 : Screening of the L. albus seed suspension (SS) for bio-stimulatory activity: The effect of a L. albus seed suspension (SS) on seed germination and subsequent seedling growth

Two sheets of special germination paper (30 x 30 cm) were used to test the effect of each SS concentration on the germination seeds from different crops as well as the subsequent seedling growth. A line, 10 cm from the top, was drawn on the one sheet and 20 seeds spaced evenly on the line. A second sheet of germination paper was placed on top of the first and moistened with either a specific SS concentration (see Method 1), distilled water (negative control) or different concentrations of *ComCat*^{®} (positive control). Both sheets of paper were rolled up longitudinally and placed upright in Erlenmeyer flasks containing either SS, distilled water or the *ComCat*^{®} solution and kept at 25 °C in a growing chamber in the dark. Seed germination as well as coleoptile and root lengths were determined at 24 h intervals over a 96 h incubation period and replicated six times.

### Example 5: Description of trial sites

All vegetable and flower trials were conducted on the experimental farm of the Department of Soil, Crop and Climate Sciences, University of the Free State, near Kenilworth in the Bloemfontein district (29°01'00"S, 26°08'50"E). Maize and carrot trials were conducted on a farm, 20 kilometres north, while that of wheat on a farm 40 kilometres west of the experimental farm.

### Example 6: Experimental design and trial layout

In all cases trials were laid out in a complete randomized block design. Plot sizes differed for the different crops according to the prescribed in row and between row spacing suggestions of the seed merchant (Hygrotech) and the Agricultural Research Counsel (ARC, 2004). A summary of trial specifics is supplied for each crop in Tables 16,17 and 18.

### Example 7: Treatments

All crops were separately treated with a solubilized *Lupinus albus* seed suspension and a commercially available bio-stimulant *ComCat*^{®} (positive control) by means of foliar applications while normally fertilized plots served as a negative control. In some cases *ComCat*^{®} and *SS* were applied in combination. *ComCat*^{®} was applied, according to the specifications of the manufacturers (Agraforum, Germany), at 100 g / ha and at approximately 600 l / ha for flowers and all vegetables while half the concentration rate, 50 g / ha, applied for maize. A slightly lower volume of water (approximately 500 l / ha) was used for foliar treatment of maize while a slightly higher volume (approximately 8001 / ha) applied for wheat. As shown above a concentration of 5 mg / l is optimal for SS in enhancing seedling growth of a number of crops. Subsequently, SS was applied at 5 mg / l / 10 m² as one liter covers approximately 10 m² in a fine spray mist. A thousand liters of water per hectare were used to apply SS as a foliar spray on all crops. In all cases a wetting agent, Solitaire, was added to the SS suspension in a ratio 1:1000 (v/v). All plots received standard fertilizer at planting (see tables 1, 2 and 3) while standard disease and insect control measures were applied for each crop. Wheat was semi-irrigated using a sprinkler system, maize was cultivated under rain fed conditions while all vegetable crops as well as flowers were fully irrigated using a drip irrigation system.

### (a) Flowers

Flowers were treated at the three leaf growth stage and additional treatments applied at four week intervals, with a maximum of four applications, for both Gazanias and Impatience. The application concentrations were the same for both flowers (see 4.2.4.1). For both flowers 1000 L water ha⁻¹ was applied.

### (b) Maize and Wheat

Maize and wheat were treated only once at the three leaf growth stage. As a result of differences in plant stands the amount of water used to cover wheat and maize differed. For wheat 833 and for maize 509 l water / ha was applied.

### (c) Beetroot and carrots

Both beetroot and carrots were treated twice namely at the three to four leaf growth stage (stage 14 of principal growth stage 1; Meier, 1997. Growth stages of mono- and dicotyledonous plants. Blackwell Wissenschafts, Verlag Berlin. Pp. 40-44) and at 30% root growth (stage 39 - 43 of principal growth stage 4). The latter stage is when the root has reached 30% of its expected growth or has grown in thickness to more than 0.5 cm. For both beetroot and carrots 600 l water / ha was applied.

### (d) Lettuce and cabbage

Both lettuce and cabbage received four foliar applications. The first was at the three leaf growth stage followed by three applications at two week intervals. For both lettuce and cabbage 600 l water / ha was applied.

### Example 8: Quantification of flower responses and crop yields

### (a) Flowers

The response of Gazanias and Impatience to treatments was quantified by counting the number of flowers produced in two-week intervals. During counting, dead buds as well as newly produced flowers were noted. Although each plot contained the same number of plants, the length of the flowering period differed between species. For this reason Gazanias were counted over a period of 24 weeks and Impatience over a 12 week period.

### (b) Wheat

Twenty ears per replicate were harvested at random, after completion of the drying cycle, from plants that did not form part of the area harvested to determine the total kernel yield, and the dry weights determined. Subsequently, dry kernels were removed from the ears, counted and weighed. To obtain the total kernel yield, a 15 m² area (1.5 m x 10 m) of each replicate was harvested by means of a combine harvester. This area was chosen in the inner part of each plot to avoid any possible side effects. The final yield was expressed in ton / ha.

### (c) Maize

Maize cobs from twenty plants per row only from the middle three rows (60 cobs per replicate) were harvested by hand after completion of the drying cycle and when kernels contained 12% moisture. Subsequently, cobs were dehusked by means of a mechanical Sheller while care was taken that none of the kernels went astray. The dry kernel weight for each replicate was determined separately and expressed as ton ha⁻¹ on grounds of an average plant count of 17 400 plants per hectare.

### (d) Beetroot

Whole plants were removed by hand using a pitchfork and the bulbs separated from the foliage by means of a sharp knife. The fresh weight of bulbs and aerial parts were determined separately and expressed in ton / ha.

### (e) Lettuce and cabbage

Whole plants were removed by hand from each plot using a pitchfork and the heads separated from the foliage by means of a sharp knife. The fresh weight of heads and foliage were determined separately and expressed in ton / ha.

### (f) Carrots

Twenty carrots per replicate were selected at random from the small statistical trial and removed from the soil by hand. Subsequently, the root and foliage were separated, the fresh weights determined and the yield expressed in ton / ha. Additionally, the lengths of each carrot was measured and noted.

However, the plant stand of carrots per hectare is determined by the mass of seeds planted anc usually runs into the millions. The use of only twenty carrots per plot can, therefore, be subject to criticism from a commercial farming perspective. For this reason a second large scale trial was conducted on a farm twenty kilometres North of Bloemfontein, where half a hectare was treated with SS while the other half served as an untreated control, in order to compare the result obtained with the smaller statistical trial. The bulk of carrots were harvested using a commercial harvester. The total root yield was determined using a commercial scale and the yield was expressed in ton / ha. In the latter instance no statistical analysis could be performed.

### Example 10: Qualitative determination of the purity of the two active column fractions using thin layer chromatography

The two semi-purified fractions of a *Lupinus albus* L. seed suspension, obtained by preparative thin layer chromatography was testes for its purity by means of thin layer chromatography. Each of the fractions was spotted on a thin layer plate using a concentration range as a way to determine the purity as well as different ratios of organic solvents, thus changing the polarity of the mobile phase. After a whole range of mobile phases with different ratios of organic solvents the compounds were spotted on the plates by using the following concentration (µg / µl): 128, 64, 32, 16, 8, 4 and 2. Mobile phase: Chloroform / Methanol (95 / 5) + 1 ml glacial acetic acid. Stationary phase: Silica gel 60 on alumina. Plate is developed with 10 % ethanolic sulphuric acid. After confirmation of the purity of the active fractions any similarities between the two fractions were confirmed by using TLC-fingerprinting and different spray reagents. By means of acidified Q-TLC separation and using different mobile phase's similarities between the two compounds was confirmed. Different spray reagents like 10 % aqueous phosphoric acid validated that both compounds had a steroidal type of structure.

After this it was assumed that these two compounds (compound I and II) were exactly the same, thus confirming the presence of only one active compound, subjected to different bio-tests. The structural formula was also determined using nuclear magnetic resonance spectroscopy.

### Example 11: Identification of the active compound purified from the seeds of Lupinus albus L. by means of Nuclear Magnetic Resonance (NMR) spectroscopy

### Compound I, Glycerol trilinoleate,

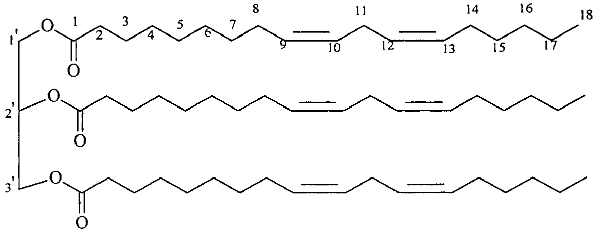

was yielded from the ethyl acetate extract of *(Lupinus albus* seeds) as yellow oil. Elucidation of compound I was by 1D and 2D spectroscopic methods (¹ H NMR, ¹³C NMR, HMQC, HMBC) and Mass spectrometry. The ¹H NMR spectrum (¹H NMR and 13C NMR resonances) of compound I did not reveal aromatic protons. However, 98 protons were observed in the ¹H NMR spectrum and because some of the protons were overlapped, it was necessary to run ¹³C NMR, HMQC and DEPT experiments.

In order to confirm the ester linkage, a hydrolysis was done. Compound I was refluxed with 0.1M hydrochloric acid for 1 hour and the product was extracted with ethyl acetate. With exception of the methylene protons (δ 4.1-4.3) and the methine (δ 5.3), the protons in ¹H NMR spectrum of the hydrolysed product were identical to those in the ¹H NMR of the starting material (compound 1). The results indicated that an ester linkage was cleaved and the acid was recovered (compound II). The ¹H NMR spectrum of the product from the hydrolysis was identical to that of the authentic linoleic acid:

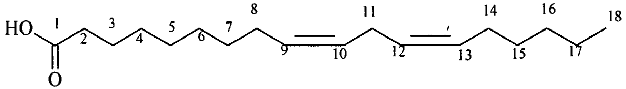

## Claims

1. Use of a plant preparation based on seeds of Lupinus albus in form of an aqueous solution or suspension of a dry powder of said plant preparation in a concentration range from 1 mg/l to 10 mg/l, as bio-stimulatory agent for cultivated plants under field and glasshouse conditions, wherein the dry powder of said plant preparation is obtained by the following steps:
(i) grinding the seed of Lupinus albus to a grit size of less than 0.1 mm,
(ii) soaking the powdered seed material of step (i) in 90 - 100% methanol or ethanol, thus forming a suspension / solution;
(iii) performing a stirred extraction of the suspension;
(iv) evaporating the solvent without prior separation of the solid phase from the soluble organic phase;
(v) soaking the evaporated solid phase residue in the solvent of step (ii) and repeating steps (iii) and (iv), and
(vi) drying the evaporated solid phase residue, thus obtaining the dry powder.

2. Use as bio-stimulatory agent of a plant preparation according to claim 1, wherein 98 - 100% ethanol is used for extracting.

3. Use as bio-stimulatory agent of a plant preparation according claim 1 or 2, wherein the first extracting step is achieved with methanol and the second extracting step is achieved with ethanol.

4. Use as bio-stimulatory agent of a plant preparation according to any of the claims 1 - 3, wherein the optimum concentration of said plant preparation is 5 mg/l (± 10%).

5. Use as bio-stimulatory agent of a plant preparation according to claim 4, wherein the bio-stimulatory effect of the preparation elicits an elevated respiration rate of yeast compared to the untreated control.

6. Use as bio-stimulatory agent of a plant preparation according to any of the claims 1 - 5, wherein the bio-stimulatory effect of the preparation elicits stimulation of germination, cleoptile growth and root growth in said cultivated plants.

7. Use as bio-stimulatory agent of a plant preparation according to any of the claims 1 - 6, wherein the preparation as obtained from the plant material contains glycerol trilinolate as active compound.

8. Use as bio-stimulatory agent of a plant preparation according to any of the claims 1 - 7, wherein the preparation further comprises solid, pulverulent carrier materials or fillers.

## Patentansprüche

1. Verwendung einer pflanzlichen Zubereitung basierend auf Samen von Lupinus albus in Form einer wässrigen Lösung oder Suspension eines Trockenpulvers dieser Pflanzenzubereitung in einem Konzentrationsbereich von 1 mg/l bis 10 mg/l als bio-stimulierendes Mittel für kultivierte Pflanzen unter Feld- und Gewächshausbedingungen, wobei das Trockenpulver dieser Pflanzenzubereitung durch folgende Schritte erhalten wird:
(i) Zermahlen der Samen von Lupinis albus bis zu einer Korngröße von kleiner als 0.1 mm,
(ii) Einweichen des gepulverten Samenmaterials aus Schritt (i) in 90 - 100% Methanol oder Ethanol unter Bildung einer Suspension / Lösung,
(iii) Durchführen einer gerührten Extraktion der Suspension,
(iv) Abdampfen des Lösungsmittels ohne vorhergehende Trennung der festen Phase von der löslichen organischen Phase,
(v) Einweichen des Rückstandes aus der eingedampften festen Phase in dem Lösungsmittel von Schritt (ii) und Wiederholen der Schritte (iii) und (iv), und
(vi) Trocknen des Rückstandes aus der eingedampften festen Phase unter Gewinnung des Trockenpulvers.

2. Verwendung als bio-stimulierendes Mittel der pflanzlichen Zubereitung nach Anspruch 1, wobei 98 - 100% Ethanol zur Extraktion verwendet wird.

3. Verwendung als bio-stimulierendes Mittel der pflanzlichen Zubereitung nach Anspruch 1 oder 2, wobei der erste Extraktionsschritt mit Methanol durchgeführt wird, und der zweite Extraktionsschritt mit Ethanol durchgeführt wird.

4. Verwendung als bio-stimulierendes Mittel der pflanzlichen Zubereitung nach einem der Ansprüche 1 - 3, wobei die optimale Konzentration der besagten Pflanzenzubereitung 5 mg/l (± 10%) beträgt.

5. Verwendung als bio-stimulierendes Mittel der pflanzlichen Zubereitung nach Anspruch 4, wobei der bio-stimulierende Effekt der Zubereitung eine erhöhte Atmungsrate von Hefe bewirkt gegenüber der unbehandelten Kontrolle.

6. Verwendung als bio-stimulierendes Mittel der pflanzlichen Zubereitung nach einem der Ansprüche 1 - 5, wobei der bio-stimulierende Effekt der Zubereitung eine Stimulierung der Keimung, von Koleoptilwachstum und von Wurzelwachstum in besagten kultivierten Pflanzen bewirkt.

7. Verwendung als bio-stimulierendes Mittel der pflanzlichen Zubereitung nach einem der Ansprüche 1 - 6, wobei die Zubereitung wie aus Pflanzenmaterial erhalten, Glycerol-trilinolat als aktive Verbindung enthält.

8. Verwendung als bio-stimulierendes Mittel der pflanzlichen Zubereitung nach einem der Ansprüche 1 - 7, wobei die Zubereitung weiter feste fein pulverisierte Träger- oder Füllmaterialien aufweist.

## Revendications

1. Utilisation d'une préparation végétale à base de graines de *Lupinus albus* sous la forme d'une solution ou suspension aqueuse d'une poudre sèche de ladite préparation végétale, selon une plage de concentration allant de 1 mg/l à 10 mg/l, comme agent bio-stimulant pour des plantes cultivées dans des conditions de plein champ et de serre, dans laquelle la poudre sèche de ladite préparation végétale est obtenue par les étapes suivantes :
(i) le broyage des graines de *Lupinus albus* jusqu'à une grosseur de grain inférieure à 0,1 mm,
(ii) le trempage du matériau de graines pulvérulent issu de l'étape (i) dans du méthanol ou de l'éthanol à 90-100%, formant ainsi une suspension/solution,
(iii) la réalisation d'une extraction sous agitation de la suspension,
(iv) l'évaporation du solvant sans séparation préalable de la phase solide à partir de la phase organique soluble,
(v) le trempage du résidu de phase solide évaporé dans le solvant de l'étape (ii) et la répétition des étapes (iii) et (iv), et
(vi) le séchage du résidu de phase solide évaporé, conduisant ainsi à la poudre sèche.

2. Utilisation comme agent bio-stimulant d'une préparation végétale selon la revendication 1, dans laquelle de l'éthanol à 98-100% est utilisé pour l'extraction.

3. Utilisation comme agent bio-stimulant d'une préparation végétale selon la revendication 1 ou 2, dans laquelle la première étape d'extraction est effectuée avec du méthanol et la deuxième étape d'extraction est effectuée avec de l'éthanol.

4. Utilisation comme agent bio-stimulant d'une préparation végétale selon l'une quelconque des revendications 1-3, dans laquelle la concentration optimale de ladite préparation végétale est de 5 mg/l (± 10%).

5. Utilisation comme agent bio-stimulant d'une préparation végétale selon la revendication 4, dans laquelle l'effet bio-stimulant de la préparation conduit à un taux de respiration élevé de la levure par rapport au témoin non traité.

6. Utilisation comme agent bio-stimulant d'une préparation végétale selon l'une quelconque des revendications 1-5, dans laquelle l'effet bio-stimulant de la préparation conduit à la stimulation de la germination, de la croissance du coléoptile, et de la croissance des racines chez lesdites plantes cultivées.

7. Utilisation comme agent bio-stimulant d'une préparation végétale selon l'une quelconque des revendications 1-6, dans laquelle la préparation telle qu'obtenue à partir du matériel végétal contient du trilinolate de glycérol comme composé actif.

8. Utilisation comme agent bio-stimulant d'une préparation végétale selon l'une quelconque des revendications 1-7, dans laquelle la préparation comprend en outre des charges ou des matériaux véhicules pulvérulents solides.
